(19) Europäisches Patentamt
European Patent Office
Office européen des brevets

(11) **EP 3 855 900 B1**

(12) **EUROPÄISCHE PATENTSCHRIFT**

(45) Veröffentlichungstag und Bekanntmachung des Hinweises auf die Patenterteilung:
**07.09.2022  Patentblatt 2022/36**

(21) Anmeldenummer: **18782871.0**

(22) Anmeldetag: **28.09.2018**

(51) Internationale Patentklassifikation (IPC):
***A01J 25/00*** *(2006.01)*

(52) Gemeinsame Patentklassifikation (CPC):
**A01J 25/008**

(86) Internationale Anmeldenummer:
**PCT/CH2018/000039**

(87) Internationale Veröffentlichungsnummer:
**WO 2020/061717 (02.04.2020 Gazette 2020/14)**

(54) **VORRICHTUNG UND VERFAHREN ZUM KONTINUIERLICHEN FÖRDERN UND PLASTIFIZIEREN VON KÄSEBRUCH**

DEVICE AND METHOD FOR CONTINUOUSLY CONVEYING AND PLASTICISING CHEESE CURD

PROCÉDÉ ET DISPOSITIF POUR LE TRANSPORT ET LA PLASTIFICATION CONTINUS DE LAIT CAILLÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.08.2021  Patentblatt 2021/31**

(73) Patentinhaber: **Sulbana AG**
**8352 Elsau (CH)**

(72) Erfinder: **BÄHLER, Balz**
**8353 Elgg (CH)**

(74) Vertreter: **Keller Schneider**
**Patent- und Markenanwälte AG**
**Eigerstrasse 2**
**Postfach**
**3000 Bern 14 (CH)**

(56) Entgegenhaltungen:
**WO-A1-2015/164391       WO-A2-2006/026811**
**US-A- 4 054 271         US-B1- 8 221 816**

EP 3 855 900 B1

**Beschreibung**

**Technisches Gebiet**

Die Erfindung betrifft eine Vorrichtung zum kontinuierlichen Fördern und Plastifizieren von Käsebruch, insbesondere für die Herstellung von Pasta-Filata-Käse. Die Vorrichtung umfasst ein Gehäuse mit einer länglichen Kammer mit einer Einlassöffnung und einer Auslassöffnung sowie mindestens ein Paar in der Kammer angeordnete gegenläufig antreibbarer Förderwellen, deren parallele Drehachsen in Längsrichtung zur Kammer verlaufen. Dabei besitzen die Förderwellen jeweils einen Schaft mit einem kreiszylindrischen Schaftabschnitt sowie jeweils eine am Umfang des Schafts angeordnete wendelförmige Struktur mit einem oder mehreren Wendelgängen zur axialen Förderung des Käsebruchs von der Einlassöffnung zur Auslassöffnung, wobei die wendelförmigen Strukturen beider Förderwellen ineinander eingreifen. Die Vorrichtung umfasst auch ein Antriebsmittel zum gegenläufigen Antreiben der Förderwellen sowie eine Heizvorrichtung, welche mindestens einen Teil des Schafts und mindestens einen Teil einer Innenmantelfläche der Kammer erhitzen kann. Die Erfindung betrifft zudem ein Verfahren zum kontinuierlichen Fördern und Plastifizieren von Käsebruch, insbesondere für Pasta-Filata-Käse.

**Stand der Technik**

Aus dem Stand sind Anlagen zum kontinuierlichen Fördern und Plastifizieren von Käsebruch bekannt, insbesondere auch für die Herstellung von Pasta-Filata-Käse. Die bekannteste Pasta-Filata-Käsesorte ist Mozzarella. Weitere typische Sorten sind unter anderem teilentrahmter Mozzarella mit geringem Feuchtigkeitsgehalt, Provolone, Scamorza, Kashkaval/Kasheri, aber auch Bocconcini, Burrata, Caciotta, Caciocavall, Fior di Latte, Girellone, Girellone farcito, Palermitano, Perette bianche, Perette affumicate, Perette filoncini, Ragusano, Scamorza, Tenerella und Trecce.

Pasta-Filata-Käsesorten zeichnen sich durch einen besonderen Herstellschritt aus, bei welchem der Käsebruch, nachdem er in kleine Portionen getrennt wurde, aufgeschmolzen bzw. plastifiziert, gezogen und geknetet wird. Durch diesen als Filieren bezeichneten Arbeitsschritt erhält der Käse eine faser- oder eine faserähnliche Struktur, die dem fertigen Käse eine gewünschte Elastizität verleiht.

Im traditionellen Filierverfahren wird der Käsebruch durch Mischen mit heissem Wasser mit einer Temperatur von 75°C - 95°C, welches auch als Filierwasser bezeichnet wird, direkt erhitzt bis der Käse eine Temperatur von ca. 55 - 65°C erreicht hat und zu einer homogenen Masse zusammengewachsen bzw. plastifiziert ist. Dies führt jedoch zu Ausbeuteverlusten, da Käseinhaltsstoffe durch das Filierwasser ausgewaschen werden. Es gehen dabei bis zu 15 % Fett und 5 % Protein verloren. Ebenso muss das Filierwasser wieder gereinigt werden. Häufig ist jedoch eine Reinigung des Filierwassers im Rahmen der Fertigung nicht möglich, so dass Abwasser anfällt.

Das Ausgangsmaterial ändert seinen Zustand nach dem Beschicken durch die Einlassöffnung bis es im plastifiziertem Zustand über die Auslassöffnung, die Kammer der Vorrichtung in Form von Käse oder eines Käsezwischenprodukt verlässt. Unabhängig vom Plastifizierungszustand bezeichnen wir im Rahmen dieser Anmeldung, das in der Kammer befindliche, durch die Vorrichtung geförderte Käsematerial als Käsemasse.

Es sind verschiedene alternative kontinuierliche Verfahren zum Plastifizieren von gesäuertem Käsebruch bekannt, welche ohne Filierwasser auskommen. So zeigt beispielsweise die EP 2 473 028 B1 (GEA/CMT Discovery) ein Verfahren, bei welchem der Käsebruch mit Dampf in einer Knetkammer erhitzt wird, während er von einem Paar Wendelschnecken kontinuierlich transportiert wird. Dieses Verfahren reduziert die Produktverluste und es entsteht weniger bis kein Filierwasser.

Die EP 2 168 429 A1 (Bühler) zeigt ein Verfahren für die Herstellung von Milchprodukten, welches gänzlich ohne Filierwasser auskommt. In diesem Verfahren wird der Mozzarella, während er in einem Extruder über zwei Förderschnecken transportiert und indirekt von aussen beheizt. Da die Erwärmung der Käsemasse indirekt erfolgt, bezeichnet man eine solche Vorrichtung auch als einen indirekten Kocher.

Aus der US 8,221,816 B1 (Leffelman Ricky) und der WO 2015 / 164391 A1 (Johnson Industries International, INC.) sind zwei indirekte Kocher bekannt. Beide umfassen Schneckenförderer mit zwei gegenläufigen Förderschnecken, bei welchen die Erhitzung der Käsemasse indirekt sowohl über einen Doppelmantel der Knetkammer als auch über die Schnecken erfolgt, die jeweils einen hohlen Schaft mit einer hohlen Flüssigkeitskammer aufweisen. Die WO 2015 / 164391 A1 sieht zudem vor, den Doppelmantel der Knetkammer und die Flüssigkeitskammern in den Schäften bzw. in den Schneckenwendeln mit unterschiedlich warmen Flüssigkeiten zu versorgen und somit auch unterschiedlich zu erwärmen.

Die aufgeführten alternativen Filierverfahren und Filiervorrichtungen reduzieren zwar das Abwasser und führen zu einer höheren Ausbeute, sie weisen aber auch Nachteile im Vergleich zu den traditionellen Filiervorrichtungen und -verfahren auf. Diese äussern sich bei langen Anlagenlaufzeiten und hohen Leistungsstufen (ca. 1'000 - 8'000 kg/h) in einer schlechteren Käsequalität und/oder einem höheren Platzbedarf im Vergleich zu traditionellen Wasserfilieren, sofern eine ähnliche Endqualität des Käses erzielt werden soll.

**Darstellung der Erfindung**

Aufgabe der Erfindung ist es, eine auf dem eingangs genannten technischen Gebiet zugehörende Vorrichtung zu schaffen, welche die Vorteile eines indirekten Kochers aufweist, d. h. zu weniger Produktverlusten führt und weniger Abwasser aufweist, es aber ermöglicht, eine ähnliche Endproduktqualität wie ein traditioneller Wasserfilierer zu erreichen und zudem mit einem vergleichbaren Platzbedarf auskommt. Zudem ist es die Aufgabe der Erfindung ein entsprechendes Verfahren zu schaffen, welches zu weniger Produktverlusten führt und weniger Abwasser generiert als ein traditionelles Filierverfahren, welches aber eine ähnliche Endproduktqualität ermöglicht.

Die Lösung der Aufgabe ist durch die Merkmale des Anspruchs 1 definiert. Gemäss der Erfindung wird die Aufgabe dadurch gelöst, dass die Förderwellen mindestens ein Mitnahmemittel aufweisen, welches so ausgelegt ist, dass der zu fördernde und zu plastifizierende Käsebruch im Betrieb mindestens teilweise auch um die beiden Förderwellen herum transportiert wird.

Die Aufgabe der Erfindung wird ferner durch die Merkmale von Anspruch 15 gelöst. Gemäss der Erfindung umfasst das Verfahren zum kontinuierlichen Fördern und Plastifizieren von Käsebruch, insbesondere für Pasta-Filata-Käse, folgende Schritte:

a) Beschicken der Vorrichtung gemäss einem der Ansprüche 1 - 14 mit Käsebruch, bevorzugt in gleichmässig gestückelter Form, als Ausgangsmaterial über die Einlassöffnung,

b) fördern des zu plastifizierenden Käsebruchs entlang eines Förderwegs zwischen der Einlassöffnung und einer Auslassöffnung der Vorrichtung durch gegenläufiges Antrieben der Förderwellen, bevorzugt so dass die zu plastifizierende Käsebruchmasse gestreckt wird, vorzugsweise mit einer Drehzahl zwischen 0.5 und 25 U/min, besonders bevorzugt zwischen 1 - 10 U/min,

c) beheizen der Innenmantelfläche der Kammer und der Förderwellen mit der Heizvorrichtung, so dass der Käsebruch an der Auslassöffnung eine Temperatur von 50°- 70°, bevorzugter Weise von 55°C-65°C erreicht, wobei der Käsebruch kontinuierlich plastifiziert wird,

wobei bei dem Verfahren der kontinuierlich zu fördernde Käsebruch nicht nur axial in Förderrichtung, sondern auch um die Förderwellen herum transportiert wird.

Durch die erfindungsgemässe Vorrichtung und das erfindungsgemässe Verfahren wird erreicht, dass der zu fördernde Käsebruch mindestens teilweise, sowohl in Ausgangsform, als auch in teilweise schon plastifizierter Form mit den Förderwellen mitrotiert und so im Kanal bewegt wird, welcher jeweils durch den Schaft der Förderwelle, den Wendelgängen der wendelförmigen Struktur und der Innenmantelfläche der Kammer gebildet wird.

Das bewirkt, dass der in der Vorrichtung geförderte Käsebruch bzw. die in der Vorrichtung geförderte Käsemasse zeitweise an einer der Wandungen des Innenmantels der Kammer fliesst, und dadurch eine bessere Durchmischung des Käsebruchs bzw. der Käsemasse erzielt wird, ohne dass dieser bzw. diese dabei einer grossen Strukturzerstörung unterliegt. Dadurch wird eine gleichmässige Temperaturverteilung des Käsebruchs bzw. der Käsemasse von innen nach aussen erreicht. Das heisst, dass die Käsemasse zwischen dem Schaft einer Förderwelle und dem Innenmantel der Kammer nur eine geringe Temperaturdifferenz aufweist. Grosse Temperaturunterschiede in Randzonen der Käsemasse, also im Bereich der Schäfte des Förderwellenpaars und im Bereich des Innenmantels der Förderkammer, zur Temperatur im Kern der Käsemesse können vermieden werden. Nicht akzeptabel sind insbesondere Temperaturunterschiede von ≥ 10°C. Durch die Erfindung kann erreicht werden, dass der gesamte Käsebruch bzw. die gesamte Käsemasse in kurzer Zeit auf die für die Plastifizierung notwendige Temperatur erhitzt werden kann.

Durch die Erfindung wird verhindert, dass die Käsemasse nur durch die Wendelgänge der Förderwellen in axiale Richtung von der Einlassöffnung zur Auslassöffnung geschoben wird, die Käsemasse also als Pfropf in axialer Richtung in Richtung der Auslassöffnung geschoben wird.

Das Mitnahmemittel bewirkt folglich, dass der zu fördernde Käsebruch nicht nur durch die Wendelgänge der Wendelstruktur, also durch die Schneckenwendel, axial gefördert wird, sondern auch mit dem Förderwellen mitrotiert, also tangential zur Umfangsrichtung zum jeweiligen Schaft der Förderwellen mitgenommen wird. Insbesondere wird erreicht, dass Käsemasse nicht ausschliesslich bzw. grösstenteils in einem Bereich der länglichen Kammer gefördert wird, welcher räumlich zwischen den zwei Ebenen liegt, die jeweils durch eine der Drehachsen der Förderwellen gehen, und gleichzeitig senkrecht zum Lot zwischen der Drehachsen sind.

Insgesamt kann mit der erfindungsgemässen Vorrichtung bzw. dem erfindungsgemässen Verfahren die Qualität des Käses deutlich verbessert werden.

Als Käsebruch wird gemeinhin ein Material bezeichnet, welches aus der durch Zugabe von Lab oder Milchsäure dickgelegten Milch entsteht, nachdem diese gebrochen wurde, um Molke abzutrennen. Je nach der herzustellenden Käsesorte ist der Käsebruch in unterschiedlich grosse bzw. kleine Stücke zerteilt. Die Schnitzel können eine unterschiedliche Grösse haben. Für Pasta-Filata-Käse liegt der Käsebruch vorzugsweise in geschnetzelter Form vor. Besonders eignen sich etwa fingerkuppengrosse bis fingergrosse Schnitzel. Der Käsebruch kann auch dünne Schnitzel in Handflächengrösse umfassen, beispielsweise Schnitzel in einer Dicke von ca. 2-3 mm.

Die Vorrichtung ist vorzugsweise vorwiegend aus Edelstahl gefertigt. Als Edelstahl ist beispielsweise ein Edelstahl vom Typ AISI 304/1.4301 oder AISI 316L/1.4404 geeignet (klassiert nach dem System des American Iron and Steel Institute (AISI)). Es können jedoch auch Komponenten aus anderen Materialien verwendet werden, die im Bereich der Lebensmittelherstellung geeignet sind. Derartige Materialien sind dem Fachmann bekannt. Geeignet sind beispielsweise Kunststoffe wie Polyethylen (PE) und/oder Polypropylen (PP).

Der Schaft der Förderwelle ist vorzugsweise als Hohlschaft ausgebildet an dessen Ende insbesondere Lagerzapfen angebracht sind. Der Hohlschaft hat ein deutlich geringes Gewicht als ein Vollschaft.

Besonders bevorzugt sind die Mitnahmemittel nur in der ersten Hälfte des Förderwegs auf den Förderwellen angeordnet, insbesondere nur im ersten Drittel oder im ersten Viertel des Förderwegs, denn sobald sich einmal ein Streifen an Käsemasse um die Förderwellen gewickelt hat, dreht er sich in der Regel weiter mit.

Bevorzugterweise umfasst die Vorrichtung eine Knetkammer und /oder einen Trockensalzer und/oder einen Former, welche die in der Kammer plastifizierte Käsemasse weiter verarbeiten können. Der Former gibt dem Käse dabei seine endgültige Form. Ebenso umfasst die Vorrichtung vorzugsweise einen Schnitzler, welcher geschnitzelten Käsebruch am Eingang der Einlassöffnung zur Verfügung stellen kann.

In einer bevorzugten Ausführungsform der Erfindung weist mindestens ein Wendelgang der wendelförmigen Struktur durchgehende Flügel auf.

Durchgehende Flügel sind besonders einfach herzustellen und können einfach gereinigt werden. Zudem haben durchgehende Flügel eine bessere mechanische Stabilität. Die Flügel können beispielsweise aus einem Flach- oder Bandstahl hergestellt werden. Jedoch ist auch eine Herstellung aus einzelnen, hintereinander gereihten Flügelsegmenten möglich. Vorzugsweise sind die Flügel bzw. Flügelsegmente stumpf mit der entsprechenden Förderwelle verbunden, beispielsweise durch Aufschweissen. Generell können die Förderwellen auch komplett als Giessteil gefertigt werden.

Besonders bevorzugt ist eine Ausführungsform, bei welcher alle Wendelgänge der Wendelstruktur durchgängig sind.

In einer weiteren bevorzugten Ausführungsform umfasst mindestens ein Wendelgang unterbrochene und/oder gebogene Flügel.

Unterbrochene Flügel erlauben es, auf eine besonders einfache Art Mitnahmemittel zu realisieren. So können Flügelkanten der unterbrochenen Flügel bei entsprechender Ausgestaltung bewirken, dass Käsemasse mit den Förderwellen mitrotiert, also tangential zur Umfangsrichtung zum jeweiligen Schaft der Förderwellen mitgenommen wird.

Der Unterbruch in einem unterbrochenen Flügel erstreckt sich vorzugsweise radial vom äusseren Ende des Flügels, also dem Punkt, welcher am weitesten von der entsprechenden Drehachse der Förderwelle entfernt ist, bis zum Punkt, an welchem er am Schaft der jeweiligen Förderwelle befestigt ist. Es ist allerdings auch möglich, dass der Unterbruch nicht durchgehend ist. Wendelgänge mit unterbrochenen Flügel können aus einzelnen Flügelsegmenten hergestellt sein. Durch den Unterbruch der Flügel kann beispielsweise auch Gewicht gespart werden. Ein Flügel weist vorzugsweise mehrere Unterbrüche auf. Diese können äquidistant zueinander angeordnet sein. Es ist jedoch vorteilhaft, die Unterbrüche entlang der Förderwelle so zu verteilen, dass vor allem im Bereich der Einlassöffnung ein besserer Mitnahmeeffekt entsteht, beispielsweise durch einen geringeren Abstand der Unterbrüche im Bereich der Einlassöffnung.

Über gebogene Flügel können auf effiziente Weise Mitnahmemittel entsprechend der Erfindung bereitgestellt werden. Unter einem gebogenen Flügel eines Wendelgangs wird ein Flügel verstanden, bei welchem ein Flächenteil des Flügels gegenüber dem Verbleibenden Flügel so gebogen ist, so dass er ausserhalb der fiktiven Schraubenkontur liegt, in welcher der Wendelgang bzw. der ganze Flügel sonst liegen würde. Der Flügel kann dabei sowohl in Umfangsrichtung, in radiale Richtung oder in Umfangsrichtung und in radiale Richtung gleichzeitig gebogen sein. Besonders bevorzugt wird jedoch eine Biegung entlang einer im Wesentlichen radial zur Förderwelle verlaufenden Biegelinie.

Besonders vorteilhaft ist eine Ausgestaltungsform, bei welcher ein Wendelgang unterbrochen ist und durch den oder die Unterbrüche mehrere unterbrochene Flügel bildet und die unterbrochenen Flügel gleichzeitig gebogen sind, denn besonders im Bereich des Unterbruchs kann der Flügel besonders einfach gebogen werden. Eine besondere Form eines gebogenen Flügels stellt ein wellig gebogener Flügel dar. Bevorzugt ist dabei ein Flügel, dessen Wellenstrukturen in Umfangsrichtung verlaufen, bzw. die Wellentäler und Wellenberge radial in Bezug auf die Förderwelle ausgerichtet sind.

Sowohl ein unterbrochener als auch ein gebogener Flügel kann aus einzelnen Segmenten hergestellt werden. Es ist jedoch möglich, diese Flügel zusammen mit dem Schaft der Förderwelle zu giessen. Es ist auch möglich, den Flügel aus einem Flach- oder Bandstahl herzustellen und die Unterbrüche- und/oder Biegungen anschliessend vorzunehmen. Es sind auch weitere auftragende und/oder abtragende Fertigungsverfahren nach dem Stand der Technik anwendbar.

Besonders bevorzugt umfasst das Mitnahmemittel einen Vorsprung auf der Förderwelle. Ein Vorsprung auf der Förderwelle kann sowohl ein Vorsprung auf einem Wendelgang der Wendelstruktur der Förderwelle sein als auch ein Vorsprung auf dem Schaft der Förderwelle. Ein Vorsprung auf dem Wendelgang ist eine vertikale Erhebung auf einer der Flügelflächen eines Wendelgangs, wobei diese Erhebung mindestens einen halben Millimeter aus der Flügelfläche hervorragen muss, vorzugsweise über mehr als 1 mm oder mehr als 5 mm, und sich maximal über den halben Umfang der Welle erstrecken darf.

Ein Vorsprung auf dem Schaft ist eine Erhebung in Bezug auf eine im Wesentlichen kreisrunde Grundform des Schafts einer Förderwelle, welche sich ebenfalls über mehr als einen halben Millimeter, vorzugsweise über mehr als 1 mm oder mehr als 5 mm, von der Grundform abhebt.

Die Erhebung auf dem Schaft und damit der Vorsprung kann sich in axialer Richtung von einer Flügelfläche bis einer Flügelfläche des benachbarten Flügels erstrecken. Ebenso kann sich eine Erhebung auf dem Flügel und damit auch der Vorsprung auf einer Flügelfläche vom Schaft bis zum Aussendurchmesser des Flügels erstrecken. Schliesslich kann ein Vorsprung aber auch durch eine rippen- bzw. stegförmige Verbindung zwischen Schaft und Flügelfläche gebildet werden.

Ein Vorsprung eignet sich besonders gut für die Mitnahme von Käsemasse, da bei Drehung der Förderwelle Käsematerial bzw. Käsemasse an diesem hängenbleibt und in Umfangsrichtung befördert wird. Es ist jedoch auch möglich, einen Mitnahmeeffekt durch eine Vertiefung zu erzeugen, in welche sich Käsemasse eingräbt, welche dann die benachbarte Käsemasse mitzieht. Ebenfalls kann ein Mitnahmeeffekt durch die Oberflächenbeschaffenheit bzw. Oberflächenstruktur des Schafts- und/oder der Flügelflächen eines Wendelgangs erzielt werden.

In einer besonders bevorzugten Ausführungsform umfasst das Mitnahmemittel einen Vorsprung auf der Förderwelle, der durch ein auf der Förderwelle angebrachtes Element ausgebildet ist. Als ein auf der Förderwelle aufgebrachtes Element wird ein separates Element verstanden, welches auf die Förderwelle aufgesetzt wird. Das auf der Förderwelle angebrachte Element ermöglicht es, den Vorsprung auf besonders effiziente Weise zu realisieren. Die Realisierung des Vorsprungs durch ein auf der Förderwelle angebrachtes Element ermöglicht es auch eine herkömmliche Förderwelle zu modifizieren, auch nachträglich. Beispielsweise kann ein Element an eine bestehende Förderwelle angeschweisst, geklebt, geschraubt, geklemmt oder genietet werden. Es ist jedoch auch möglich, das Element durch Materialauftrag zu erzeugen, beispielsweise durch Giessen oder durch schichtweisen Materialauftrag. Das Element kann aus einem anderen Material bestehen als die Förderwelle, bzw. als der oder die Teile der Förderwelle, auf welchem das Element angebracht ist.

Bevorzugt ist das auf der Förderwelle angebrachte Element ein flächiges Element mit mindestens einer Hauptfläche. Dabei ist die mindestens eine Hauptfläche so ausgerichtet, dass Umfangslinien der Drehachse der Förderwelle im Wesentlichen senkrecht zur Hauptfläche stehen, insbesondere ist das auf der Förderwelle angebrachte Element eine Platte.

Durch den grossen in Umfangsrichtung gerichteten Flächenbereich kann ein besonders guter Mitnahmeeffekt erzielt werden. Es hat sich gezeigt, dass sich beispielsweise besonders rechteckige Platten mit einer Hauptfläche von 40 x 25 mm eignen, wobei die längere Seitenkante vorzugsweise in Richtung der Drehachsen der Förderelemente gerichtet sein sollten. Rechteckige Platten sind besonders günstig herzustellen und auch einfach zu reinigen. Es können jedoch auch andere flächige Elemente verwendet werden, welche beispielsweise eine nicht rechteckige Grundfläche besitzen. In einer weiteren Ausführungsform haben die flächigen Elemente eine zur Drehrichtung gerichtete nach innen gewölbte Hauptfläche, wodurch ein Schaufeleffekt entsteht.

Bevorzugterweise wird das auf der Förderwelle angebrachte Element an der Wendelstruktur und/oder am Schaft angeordnet. Eine Anordnung des Elements an der Wendelstruktur ist besonders einfach herzustellen, da das Element auf einer im Wesentlichen ebenen Fläche des Flügels eines Wendelgangs angeordnet werden kann. Zudem ist bei einer solchen Anordnung die Reinigung einfach. Eine Anordnung am Schaft ist dagegen vorteilhaft, wenn das Element eine lange axiale Ausdehnung hat, da dann das Element entlang einer in dieser Richtung verlaufenden Kontur am Schaft befestigt und somit eine gute mechanische Stabilität erzielt werden kann. Für eine besonders gute mechanische Stabilität bietet es sich an, das Element an der Wendelstruktur und am Schaft gleichzeitig anzuordnen.

Es ist besonders vorteilhaft, wenn die Vorrichtung einen Vorsprung aufweist, der durch eine Flügelkante eines unterbrochenen Flügels und/oder durch einen gebogenen Flügelabschnitt eines gebogenen Flügels gebildet wird. Die Flügelkante kann so ausgebildet sein, dass sie in Bezug auf den Wendelgang einen Vorsprung bildet, indem der Flügel an der Kante beispielsweise eine grösser Dicke aufweist und/oder der Flügel im Bereich der Flügelkante gebogen ist. Der Vorsprung im Flügel kann jedoch auch durch einen gebogenen Flügelabschnitt gebildet werden, welcher nicht im Bereich einer Flügelkante liegt. Beispielsweise kann durch eine Biegung in Form einer radialen Falte, ein guter Mitnahmeeffekt bei gleichzeitig guter mechanischer Stabilität erzielt werden. Je nach Biegeradius wird auch die Reinigung nicht wesentlich erschwert.

In einer besonderen Ausführungsform weisen benachbarte Flügel eines Wendelgangs jeweils eine Biegung in Form eines rechtwinkligen, radial zur Förderwelle verlaufenden Falzes auf, über welchen sie mit dem benachbarten Flügel verbunden sind.

Es ist besonders bevorzugt, dass eine Innenmantelfläche der länglichen Kammer ein erstes Segment umfasst, das zu einer der beiden Förderwellen im Wesentlichen konzentrisch ist, und ein zweites Segment, dass zur anderen der beiden Förderwellen konzentrisch ist. Dabei ist der radiale Abstand des kreiszylindrischen Schaftabschnitts der entsprechenden Förderwelle zum jeweiligen Segment der Innenmantelfläche der Kammer <= 70 mm, in bevorzugter Weise <=60 mm, <=50. <=40 mm oder <30 mm.

Dass ein Segment zur Förderwelle konzentrisch ist, bedeutet, dass es zur Drehachse der betreffenden Förderwelle konzentrisch ist. Die Segmente werden daher im Folgenden auch als konzentrische Segmente der Innenmantelfläche bezeichnet. Der radiale Abstand des kreiszylindrischen Schaftabschnitts der betreffenden Förderwelle zum entsprechenden Segment der Innenmantelfläche definiert eine Kanaldicke eines durch den kreiszylinderförmigen Schaftabschnitt, dem entsprechenden Segment der Innenmantelfläche und zwei benachbarten Wendelgängen gebildeten Wendelkanals. Der Abstand zweier benachbarter Wendelgänge in axialer Richtung definiert dagegen eine Kanalbreite des Wendelkanals. Die Kanaldicke begrenzt die Schichtdicke der Käsemasse im Wendelkanal. Durch eine Begrenzung der Kanaldicke und damit auch der Schichtdicke der Käsemasse durch die Vorgabe einer maximalen Kanal- bzw. Schichtdicke wird eine effiziente Wärmeübertragung in der Käsemasse mittels thermischer Konduktion gewährleistet. Bei einer maximalen Schichtdicke der Käsemasse von 60 - 70 mm ist es beispielsweise möglich, die Käsemasse in der Maschine so zu erhitzen, dass er bei einer Verweilzeit von 5 - 12 min auch in der Mitte des Käsestrangs eine Temperatur von 60°C erreicht und zwar ohne dass es zu Produktanbrennungen an Wandungen des Wendelkanals führt. Dabei kann gleichzeitig eine zu starke Scherung und Vermischung der Käsemasse vermieden werden. Diese würde die Struktur der Käsemassen beeinträchtigen.

Es wurde festgestellt, dass zwischen dem Gesamtvolumen des Wendelkanals bzw. dem Käsemassevolumen in der Kammer, dem maximalen radialen Abstand (also der maximalen Kanaldicke) und der minimalen zu erhitzenden Oberfläche, welche sich aus der Innenmantelfläche der Kammer und der Oberfläche der beiden Schäfte der jeweiligen Förderwellenpaare zusammensetzt, folgender näherungsweiser Zusammenhang besteht:

$$minimal\ zu\ erhitzende\ Oberfl\ddot{a}che\ [m^2] = \frac{(K\ddot{a}semasse-)\ Volumen\ Wendelkanal\ [m^3]x2}{maximale\ Kanaldicke [m]}$$

Die Oberfläche der Wendelgänge der Wendelstruktur wird bei der Bestimmung der minimal zu erhitzenden Oberfläche nicht berücksichtigt.

Der Faktor zwei ergibt sich daraus, dass die sich im Kanal befindliche Käsemasse von zwei Seiten beheizt wird, nämlich von innen durch die beiden Schäfte und von aussen durch den Innenmantel der Kammer.

Bei einer maximalen Kanaldicke von 0.07 m ergibt sich entsprechend der Formel ein Verhältnis zwischen dem in der Vorrichtung vorhandenen Käsevolumens bzw. Volumens des Wendelkanals und der minimal zu beheizenden Oberfläche ein Faktor von 2/0.07 [1/m]= 28.6 [1/m]. Bevorzugt ist ein Verhältnis von ≥ 33, insbesondere ≥ 40, im Speziellen ≥ 50 oder ≥ 60 [1/m].

Beträgt das Käsevolumen in der Kammer beispielsweise 0.15 m³ sollte die minimale Oberfläche bei einer Kanaldicke von 50mm insgesamt 6 m² betragen (0.15 m³*2/(0.05 m)= 0.15*40 m² =6 m²).

Weiterhin ist bevorzugt, dass das Gehäuse einen Deckel umfasst, welcher die Kammer abschliesst und einen Teil der Innenmantelfläche bildet, wobei der Deckel vorzugsweise Abschnitte der konzentrischen Segmente der Innenmantelfläche bildet und sich diese vom Deckel gebildeten Abschnitte der zu den beiden Förderwellen konzentrischen Segmente der Innenmantelfläche berühren.

Ein Deckel erleichtert die Zugänglichkeit der Kammer für eine Reinigung und auch für Wartungsmassnahmen.

Dadurch, dass der Deckel Abschnitte der konzentrischen Segmente der Innenmantelfläche bildet, wobei sich diese Segmente berühren, kann die Innenmantelfläche den Konturen der Einhüllenden der Förderwellen folgen, welche aus der Drehung der Förderwellen resultieren, so dass nur noch ein minimaler Spalt zwischen den Einhüllenden der Förderwellen und der Innenmantelfläche besteht. Zudem wird die durchschnittliche Kanaldicke minimiert. Dadurch kann u.a. die Oberfläche der Innenmantelfläche und die Aufheizung der Käsemasse optimiert werden. Bei den konzentrischen Segmenten handelt es sich bevorzugter Weise um Kreiszylindersegmente.

In einer weiteren bevorzugten Ausführungsform umfasst das Gehäuse einen Deckel, welcher die Kammer abschliesst und einen Teil der Innenmantelfläche bildet, wobei der vom Deckel gebildete Teil der Innenmantelfläche eben ist. Vorzugsweise schliesst die ebene durch den Deckel gebildete Innenmantelfläche tangential an die konzentrischen Segmente der Innenmantelfläche der Kammer an. Dadurch entsteht ein zusätzliches Volumen zwischen den Einhüllenden der Förderwellen und dem Deckel. Dieses ermöglicht eine bessere Durchmischung der Käsemasse.

Ebenso ist eine Ausführungsform bevorzugt, bei welcher das Gehäuse einen Deckel umfasst, welcher die Kammer abschliesst und einen Teil der Innenmantelfläche bildet, wobei der Deckel Abschnitte der konzentrischen Segmente der Innenmantelfläche bildet. Diese konzentrischen Segmente schliessen sich dabei tangential an die nicht vom Deckel gebildeten konzentrischen Segmente an. Zudem bildet der Deckel auch eine ebene Fläche der Innenmantelfläche, welche die vom Deckel gebildeten Abschnitte der konzentrischen Segmente tangential verbindet. Bei den Segmenten handelt es sich dabei bevorzugt um Kreiszylindersegmente. Durch diese Ausführungsform entsteht ebenso wie bei einem flachen Deckel ein zusätzliches Volumen zwischen den Einhüllenden der Förderwellen und dem Deckel. Das ermöglicht eine bessere Durchmischung der Käsemasse. Zudem kann der Deckel durch die kreiszylindrischen Abschnitte breiter ausgestaltet sein, da er der Kontur der Einhüllenden der Förderwellen folgt. Vorzugsweise ist der Deckel so ausgestaltet, dass die Abschnitte der konzentrischen Segmente, welche vom Deckel gebildet werden, in der gemeinsamen Ebene, in welcher die beiden parallelen Drehachsen liegen, tangential in die konzentrischen Segmente der Innenmantelfläche übergehen, welche nicht durch den Deckel gebildet werden. Der Deckel kann so die Förderwellen in der gesamten Breite abdecken. Die grössere Deckelbreite verbessert die Zugänglichkeit der Kammer für Wartungs-, Reparatur und Reinigungsarbeiten.

Bevorzugt sind die zu den jeweiligen Förderwellen konzentrischen Segmente der Innenmantelfläche miteinander verbunden, so dass sie die Förderwellen komplett umschliessen.

Da die Segmente des Innenmantels konzentrisch zu den kreiszylindrischen Schaftabschnitten sind, kann die Innenmantelfläche den Konturen der Einhüllenden der Förderwellen folgen. Dadurch kann ein kleiner, im Wesentlichen äquidistanter Spalt zwischen den Einhüllenden der Förderwellen und der Innenmantelfläche der Kammer realisiert werden. Ebenso kann eine im Wesentlichen konstante Kanaldicke über den gesamten Umfang des Innenmantels erreicht werden. Dies ermöglicht es, die für die Erwärmung der Käsemasse zur Verfügung stehende Oberfläche des Innenmantels der Kammer sowie die Aufwärmung der Käsemasse zu optimieren.

In einer bevorzugten Ausführungsform der Erfindung ist die längliche Kammer im Wesentlichen horizontal ausgerichtet.

Die im Wesentlichen horizontale Ausrichtung bezieht sich auf die bestimmungsgemässe Verwendungsposition der Vorrichtung. Die Ausrichtung der Kammer wird dabei durch die Neigung der Drehachsen zur Waagrechten definiert. Eine im Wesentlichen horizontale Ausrichtung schliesst erfindungsgemäss eine kleine Neigung nicht aus, welche beispielsweise das Abfliessen einer Reinigungsflüssigkeit ermöglicht, damit diese nicht in der Maschine stehen bleibt. Typischerweise beträgt eine solche Neigung 1 - 10 Winkelgrad, insbesondere 3 - 5 Winkelgrad.

Es ist jedoch auch möglich, die Achse mit einem zur Waagrechten geneigten Winkel zu betreiben, beispielsweise mit einem Winkel, beispielsweise mit 45°, bei welchem die Käsemasse in Bezug auf die Waagrechte nach oben transportiert wird.

Eine horizontale Ausrichtung ist jedoch einfacher zu realisieren. Zudem muss die Käsemasse nicht gegen die Schwerkraft noch oben transportiert werden.

Weiterhin ist bevorzugt, dass die wendelförmigen Strukturen beider Förderwellen so konfiguriert sind, dass bei einer gegenläufiger Drehrichtung der Förderwellen bei welcher die vertikalen Tangentialgeschwindigkeitskomponenten der Förderwellen zwischen den Drehachsen nach oben gerichtet sind, eine axiale Förderung des Käsebruchs von der Einlassöffnung zur Auslassöffnung bewirkt wird.

Von oben betrachtet bewegen sich beide Förderwelle bei bestimmungsgemässer Drehrichtung folglich nach aussen. Das bedeutet, dass von oben bestückter Käsebruch durch die Mitnahmemittel der Förderwellen erst nach aussen und um die Förderwellen herum transportiert wird. Dadurch verteilt sich die Käsemasse sofort in der Kammer und bleibt nicht zwischen den Förderwellen hängen. Die Käsemasse verteilt sich damit sehr gut zwischen dem Innenmantel und den Schäften der Förderwellen. Damit kann die zur Verfügung stehende Oberfläche des Innenmantels als auch die Oberfläche der Schäfte optimal für die Erwärmung der Käsemasse genutzt werden.

Eine Anordnung der Einlassöffnung auf der Oberseite der Kammer wird besonders bevorzugt, da sie nicht nur eine einfache Bestückung mit Käsebruch ermöglicht sondern es in besonderem Masse ermöglicht, von den oben beschriebenen Vorteilen zu profitieren. Es ist jedoch prinzipiell auch eine axiale Bestückung oder laterale Bestückung möglich.

In einer weiteren bevorzugten Ausführungsform umfasst der Schaft einen zur Einlassöffnung hin gerichteten, verjüngten Abschnitt. Dieser beträgt vorzugsweise maximal ⅓ der Länge eines axialen Förderwegs, besonders bevorzugt maximal ¼ der Länge des axialen Förderwegs.

Die Länge L des Förderwegs ist der axiale Abstand zwischen der Einlassöffnung und der Auslassöffnung. Der im Bereich der Einlassöffnung kleinere Schaftdurchmesser ermöglicht eine gleichmässigere Bestückung der Kammer mit Käsebruch. Besonders bevorzugt ist der verjüngte Abschnitt kontinuierlich verjüngt. Insbesondere umfasst der verjüngte Abschnitt einen oder mehrere konische Teilabschnitte und/oder einen oder mehrere kreiszylindrische Teilabschnitte. Die Teilabschnitte sind vorzugsweise so angeordnet, dass die Verjüngung des verjüngten Abschnitts zur Einlassöffnung hin kontinuierlich verläuft, also nicht stufenförmig.

Durch den kontinuierlichen Verlauf wird der axiale Transport der Käsemasse erleichtert. Alternativ oder ergänzend zu konischen Abschnitten sind Teilabschnitte mit anderen kreissymmetrischen Formen denkbar, deren Durchmesser sich entlang ihrer Symmetrieachse verjüngt. Ein konusförmiger Schaftabschnitt ist jedoch einfach herzustellen, ebenso wie ein kreiszylindrischer Schaftabschnitt.

Weiterhin wird eine Vorrichtung bevorzugt, bei welcher der Wendelgänge Abschnitte unterschiedlicher Steigung aufweisen. Besonders bevorzugt variiert die Steigung der Wendelgänge mindestens im ersten Viertel des Förderwegs, insbesondere mindestens im ersten Drittel oder in der ersten Hälfte des Förderwegs.

In einer bevorzugten Ausführungsform nimmt die Steigung der Wendelgänge in Richtung des Förderwegs ab, d. h. die axialen Abstände zwischen benachbarten Flügel der Wendel werden geringer in Richtung der Ausgangsöffnung.

Durch die grössere Steigung im Bereich der Einlassöffnung wird eine gleichmässigere Durchmischung der Käsemasse im Bereich der Einlassöffnung erreicht. Durch die Abnahme der Steigung am Anfang des Förderwegs wird zudem bewirkt, dass der Käsebruch bzw. die Käsemasse am Anfang des Förderwegs komprimiert und Luft aus der Käsemasse herausgedrückt wird.

In einer alternativen Ausführungsform nimmt die Steigung der Wendelgänge in Richtung des Förderwegs zu, d. h. die axialen Abstände zwischen benachbarten Flügel der Wendel werden grösser in Richtung der Ausgangsöffnung. Eine kleine Steigung im Bereich der Eingangsöffnung ermöglicht einem schnelleren Wegtransport des Käsebruchs bzw. der Käsemasse im Bereich der Einlassöffnung. Ebenso ermöglicht sie es, den Druck auf die Käsemasse von Beginn an aufzubauen und damit die Komprimierung von Beginn an einzuleiten.

In einer weiteren bevorzugten Ausführungsform der Erfindung ist die Steigung der Wendelgänge über den gesamten Förderweg im Wesentlichen konstant.

Weiterhin ist bevorzugt, dass die Steigung der Wendelgänge am Anfang des Förderwegs abnimmt und am Ende des Förderwegs wieder zunimmt. Eine gegen Ende des Förderwegs zunehmende Steigung bewirkt, dass sich die Käsemasse in Richtung des Förderwegs zur Auslassöffnung hin entspannen kann.

Dadurch, dass der für die Komprimierung der Käsemasse erforderliche Druck bereits am Anfang aufgebaut wird, wird ein schonender Transport der Käsemasse ermöglicht.

Bevorzugt ist die Vorrichtung so ausgestaltet, dass das Verhältnis L/D zwischen der Länge L des axialen Förderwegs und einem Aussendurchmesser D der Förderwellen etwa 1 - 20 beträgt, vorzugsweise 2 - 15, insbesondere 4 - 12 oder 4 - 8.

Die Erfindung ermöglicht im Vergleich zum Stand der Technik Vorrichtungen mit einem kleinen L/D-Verhältnis herzustellen, die ohne Abwasser und Käsebestandteilverluste auskommen und dennoch eine gute Käsequalität produzieren. Dadurch weisen die erfindungsgemässen Vorrichtungen in etwa eine mit traditionellen Filiermaschinen vergleichbare effektive Länge auf, sind aber kürzer als Vorrichtungen zum kontinuierlichen Fördern und Plastifizieren von Käsebruch gemäss des Stands der Technik, welche die Käsemasse indirekt erhitzen.

Vorzugsweise umfassen die Förderwellen, insbesondere die Schäfte der Förderwellen und das Gehäuse Fluidkanäle für die Temperierung der Kammer, wobei die Fluidkanäle Bestandteil der Heizvorrichtung sind und sich dabei im Wesentlichen entlang des gesamten axialen Förderwegs erstrecken.

Der Fluidkanal des Gehäuses kann beispielsweise durch einen Doppelmantel realisiert werden, welcher den Innenmantel der Kammer umgibt. Dem Fachmann ist die Ausgestaltung von Doppelmäntel zur Temperierung, also Erwärmung bzw. auch zur Kühlung bekannt. Eine bekannte Ausführungsform eines Doppelmantels sieht spiralförmig umlaufende Kanäle vor. Ein Doppelmantel kann auch durch sogenannte Pillow plates realisiert werden. Kommerziell sind solche Produkte unter anderem unter dem Markennamen Trapcold® erhältlich. Ein Doppelmantel ermöglicht eine sehr gute Wärmerückgewinnung.

Die Fluidkanäle für die Erwärmung bzw. Temperierung der Förderwelle sind vorzugsweise im Schaft realisiert. Ergänzend bzw. alternativ dazu ist es auch möglich, die Fluidkanäle in die Wendelstruktur zu integrieren. Die Fluidkanäle der Förderwellen umfassen vorzugsweise jeweils einen äusseren Doppelmantel am Aussendurchmesser des Schafts. Das Fluid für den Fluidkanal bzw. den Doppelmantel der Förderwelle wird vorteilhafterweise axial von der Seite zugeführt, auf welcher sich die Einlassöffnung befindet.

Vorzugsweise umfassen die Schäfte im Inneren jeweils einen Rückführkanal, welcher mit dem Fluidkanal, zum Beispiel mit dem Doppelmantel, kommuniziert und das Fluid auf dieselbe Seite zurückführt, über welche der Fluidkanal der Förderwelle mit Fluid versorgt wird, vorzugsweise also zur Einlassöffnung hingerichteten Seite.

Der Schaft ist bevorzugt innen hohl und mit Luft gefüllt. Dies ermöglicht neben einer Gewichtsreduktion auch ein einfaches Durchführen des Rücklaufkanals im Inneren des Schafts. Durch die Rückführung des Fluides im Schaft, kann Platz gespart werden.

Ebenso bedingt ein kleineres Fluidvolumen im Fluidkanal des Gehäuses und/oder im Fluidkanal der Förderwelle eine höhere Strömungsgeschwindigkeit des Fluids bzw. des Heizfluids und einen besseren Wärmeübergang zwischen dem Heizfluid und der jeweiligen Wandung des Kanals.

Insbesondere ermöglicht diese Ausgestaltung mehr Freiheit in der Anordnung der Auslassöffnung, da die Fluidzuführung zur Förderwelle bzw. zum Schaft ausschliesslich über die Seite der Einlassöffnung realisiert werden kann. Aus demselben Grund ist auch das Antriebsmittel, insbesondere der Elektromotor auf dieser Seite angeordnet. Bevorzugterweise umfasst die Heizvorrichtung ein eigenes Heizelement. Anstelle eines eigenen Heizelements kann die Vorrichtung auch ohne Heizelement auskommen, indem das erhitzte Fluid von einer externen Quelle zur Verfügung gestellt wird.

Vorzugsweise handelt es sich bei dem Fluid für die Heizvorrichtung um Wasser.

Die Funktion der Vorrichtung ist jedoch nicht an eine Heizvorrichtung gebunden, die die Wärme über einen Fluidkreislauf bereitstellt. Die Erwärmung des Innenmantels und der Förderwellen kann auch über andere bekannte Wärmequellen erfolgen, wie beispielsweise über elektrische bzw. elektromagnetische Wärmequellen.

Weiterhin ist es vorteilhaft, dass die Heizvorrichtung so konfiguriert ist, dass die Temperaturdifferenz zwischen dem zugeführten Fluid und dem abgeführten Fluid sich um weniger als 10°C, vorzugsweise weniger als 5°, im Besonderen weniger als 2°C oder weniger als 1°C unterscheidet und/oder die Fluidtemperatur im Vorlauf kleiner 90°C besonders bevorzugt zwischen 75 und 85° ist.

Eine kleine Temperaturdifferenz zwischen Vorlauf- und Rücklauf und damit im Fluidkanal ermöglicht eine gleichmässige Erwärmung. Zudem werden lokal hohe Fluidtemperaturen vermieden. Durch Vorlauftemperaturen von weniger als 90°C, bevorzugter Weise zwischen 75°C und 85°C werden Produktanbrennungen an einer Wandung vermieden, beispielsweise am Innenmantel, am Schaft und/oder an der Wendelstruktur.

Die Fluidkanäle der Schäfte und des Gehäuses sind vorzugsweise an einem gemeinsamen Reservoir angeschlossen, wobei die Vorlauftemperatur ebenfalls jeweils die gleiche ist. Dadurch wird die Ausgestaltung der Vorrichtung vereinfacht.

Vorzugsweise wird auch das erfinderische Verfahren so ausgeführt, dass das Verhältnis zwischen der Summe der beheizten Oberflächen der Schäfte der Förderwellen und der Oberfläche des Innenmantels zum Volumen des sich in der Kammer befindlichen Käsebruchs $\geq 33$ m$^{-1}$, besonders bevorzugt $\geq 40$m$^{-1}$, insbesondere $\geq 50$ oder $60$ m$^{-1}$ ist.

Bevorzugter Weise wird der Käsebruch als Ausgangsmaterial mit einer Temperatur zwischen 10°C und 45°C bereitgestellt.

Zudem wird das Verfahren bevorzugt auf einer Anlage durchgeführt, bei welcher die Heizvorrichtung eine Fluidheizvorrichtung ist. Dabei wird das Fluid bevorzugt auf eine Vorlauftemperatur von 75 - 90°C, besonders bevorzugt auf 75 - 85°C temperiert.

Die Fördergeschwindigkeit bzw. die Drehzahl wird vorzugsweise so gewählt, dass die Käsemasse zwischen 2 und 20 min, bevorzugt zwischen 5 und 12 min in der Kammer der Vorrichtung verbleibt.

Bei dem bereitgestellten Käsebruch handelt es sich Insbesondere in gesäuertem Käsebruch, vorzugsweise in gleichmässig gestückelter Form.

Die Schnitzel bzw. Stücke des Käsebruchs sind bevorzugt fingerkuppengross, fingergross, oder auch handflächengross mit einer Dicke von ca. 2-3 mm.

Aus der nachfolgenden Detailbeschreibung und der Gesamtheit der Patentansprüche ergeben sich weitere vorteilhafte Ausführungsformen und Merkmalskombinationen der Erfindung.


**Kurze Beschreibung der Zeichnungen**

Die zur Erläuterung des Ausführungsbeispiels verwendeten Zeichnungen zeigen:

Fig. 1            eine schematischer Vertikalschnitt durch eine erstes Ausführungsbeispiel der erfindungsgemässen Vorrichtung;

Fig. 2a           eine schematische Draufsicht des Förderwellenpaars des ersten Ausführungsbeispiels der Erfindung gemäss Fig. 1;

Fig. 2b           eine schematische Seitenansicht des Förderwellenpaars des ersten Ausführungsbeispiels der Erfindung gemäss Fig. 1;

Fig. 2c           eine schematische Vorderansicht des Förderwellenpaars des ersten Ausführungsbeispiels der Erfindung gemäss Fig. 1;

Fig. 2d           den axialer Schnitt AB in Fig. 1, stark vereinfacht;

Fig. 2e           ein Detail des Vertikalschnitts gemäss Fig. 1, stark vereinfacht;

Fig. 3            eine schematische Seitenansicht einer Förderwelle eines zweiten Ausführungsbeispiels der Erfindung;

Fig. 4            eine schematische Draufsicht eines Förderwellenpaars eines dritten Ausführungsbeispiels der Erfindung;

Fig. 5-10         Schematische Querschnitte des Förderwellenpaars des dritten Ausführungsbeispiels der Erfindung;

Fig. 11           eine schematische und stark vereinfachte Darstellung der erfinderischen Vorrichtung gemäss einem vierten Ausführungsbeispiel der Erfindung;

Fig. 12           eine schematische und stark vereinfachte Darstellung der erfinderischen Vorrichtung gemäss einem fünften Ausführungsbeispiel der Erfindung;

Fig. 13      eine schematische Seitenansicht der erfinderischen Vorrichtung gemäss einem sechsten Ausführungsbeispiel der Erfindung;

Fig. 14      eine schematische Seitenansicht der erfinderischen Vorrichtung gemäss einem siebten Ausführungsbeispiel der Erfindung;

Fig. 15      eine schematische Seitenansicht der erfinderischen Vorrichtung gemäss einem achten Ausführungsbeispiel der Erfindung;

Fig. 16      einen schematischen axialen Schnitt der erfinderischen Vorrichtung gemäss einem neunten Ausführungsbeispiel der Erfindung;

Fig. 17      einen schematischen axialen Schnitt der erfinderischen Vorrichtung gemäss einem zehnten Ausführungsbeispiel der Erfindung;

Fig. 18a und b      jeweils eine schematische Seitenansicht der erfinderischen Vorrichtung gemäss einem elften Ausführungsbeispiel der Erfindung, wobei in Fig. 18b. vom beheizbaren Gehäuse nur der Deckel dargestellt ist.

Grundsätzlich sind in den Figuren eines gleichen Ausführungsbeispiels gleiche Teile mit gleichen Bezugszeichen versehen. Entsprechende Teile in unterschiedlichen Ausführungsform unterscheiden sich in ihrer Hunderter-Stelle. Sie wird für jede zusätzliche Ausführungsform jeweils um 1 erhöht. Teile, welche der ersten Förderwelle des Förderwellenpaars zugeordnet sind, sind durch den Zusatz ".1" gekennzeichnet. Teile, welche der zweiten Förderwelle des Förderwellenpaars zugeordnet sind, sind durch den Zusatz ".2" gekennzeichnet.

## Wege zur Ausführung der Erfindung

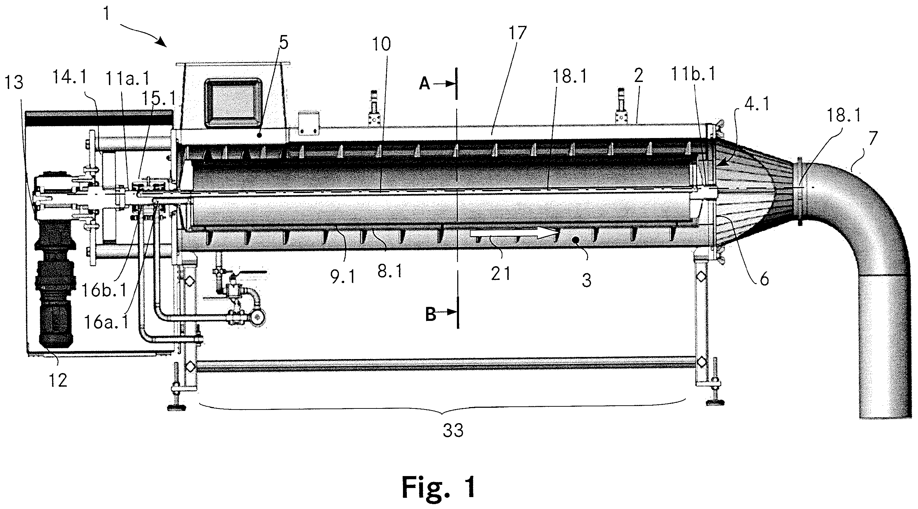

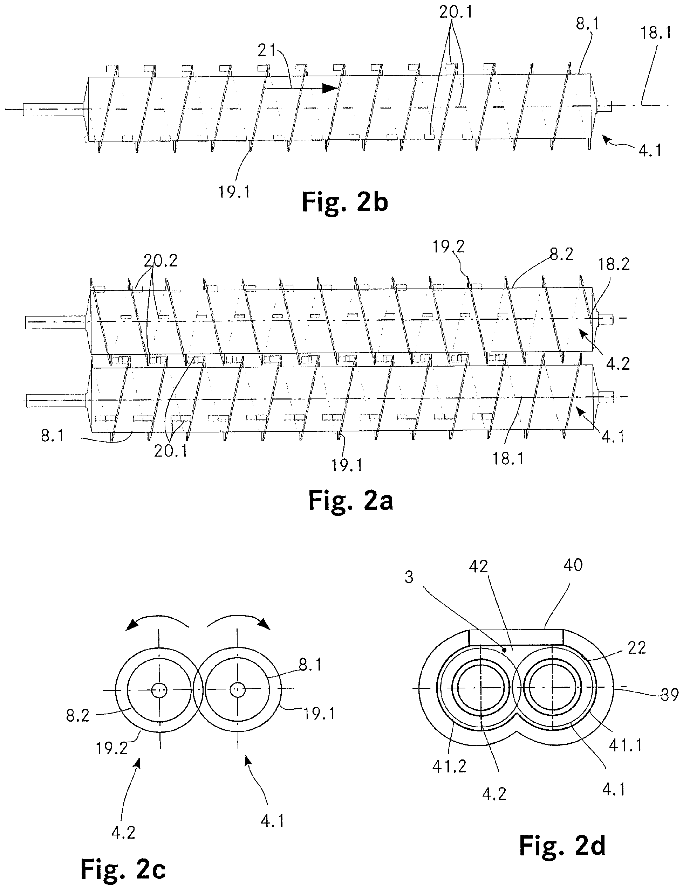

Fig. 1 zeigt einen schematischen Vertikalschnitt eines ersten Ausführungsbeispiels der erfinderischen Vorrichtung 1 zum kontinuierlichen Fördern und Plastifizieren von Käsebruch bzw. von Cagliata. Diese Vorrichtung ist insbesondere für die Herstellung von Mozzarella geeignet. Die Vorrichtung 1 umfasst ein Gehäuse 2 mit einer inneren länglichen Kammer 3, in welcher ein Paar gegenläufig angetriebener Förderwellen angeordnet ist, wobei das Förderwellenpaar eine erste Förderwelle 4.1 und eine zweite Förderwelle 4.2 umfasst. In Fig. 1 ist nur die erste Förderwelle 4.1 im Vertikalschnitt sichtbar, da die zweite Förderwelle 4.2 durch die erste Förderwelle 4.1 grösstenteils verdeckt ist. Die Darstellung der Förderwelle 4.1 in Fig. 1 ist auch insofern vereinfacht, dass sie nicht die Mitnahmemittel der Förderwelle zeigt. Die Förderwellen 4.1 und 4.2 des ersten Ausführungsbeispiels sind jedoch in den Figuren 2a - 2c separat mit den Mitnahmemittel dargestellt. Die Förderwellen 4.1 und 4.2 sind beide drehbar im Gehäuse 3 gelagert, wobei Ihre Drehachsen 18.1, 18.2 (Fig. 2a) parallel zueinander angeordnet sind.

Das Gehäuse 2 umfasst an einem Ende auf der oberen Seite eine Einlassöffnung 5, durch welche geschnitzelter Käsebruch von oben zugeführt werden kann. Am anderen Ende des Gehäuses 2 befindet sich eine axiale Auslassöffnung 6, durch welche der mittels der Förderwellen 4.1 und 4.2 geförderte und auf dem Förderweg 33 zwischen Einlassöffnung 5 und Auslassöffnung 6 plastifizierte Käsebruch die längliche Kammer 3 der Vorrichtung 1 über einen rohrförmigen Kanal 7 verlassen kann. Die Förderrichtung der Vorrichtung 1 ist durch den Pfeil 21 dargestellt. Sie verläuft parallel zu den Drehachsen 18.1, 18.2 von der Einlassöffnung 5 in Richtung der Auslassöffnung 6.

Die Drehachsen sind bei bestimmungsgemässen Betrieb dabei im Wesentlichen horizontal zur Aufstellebene ausgerichtet, d. h. sie haben nur eine geringe Neigung von etwa 3° zur Auslassöffnung 6 hin. Dies ermöglicht das Ablaufen von Wasser, z. B. bei einer Reinigung der Kammer. In der schematischen Darstellung ist diese Neigung jedoch nicht erkennbar.

Die Förderwellen 4.1 und 4.2 sind sehr ähnlich aufgebaut, weshalb die gemeinsamen Merkmale nur anhand der ersten Förderwelle 4.1 beschrieben werden. Beide Förderwellen umfassen einen im Wesentlichen kreiszylindrischen Hohlschaft 8.1, der am Aussendurchmesser einen Doppelmantel 9.1 aufweist. Der Doppelmantel 9.1 dient als Wasserkanal für die Temperierung bzw. Erhitzung des Innenmantels der Kammer 3 bzw. der darin befindlichen Käsemasse. Der Hohlschaft 8.1 weist an seinen beiden Enden jeweils einen Lagerzapfen auf, und zwar einen vorderen Lagerzapfen 11a.1 auf der Seite der Einlassöffnung 5 und einen hinteren Lagerzapfen 11b.1 auf der Seite der axialen Auslassöffnung 6.

Auf der Seite der Einlassöffnung 5 befindet sich in der Verlängerung des vorderen Lagerzapfens 11a.1 ein Elektromotor 12 mit einem Winkelgetriebe 13, dessen Ausgangswelle über eine Ausgleichskupplung mit dem vorderen Lagerzapfen 11a.1 verbunden ist und somit die erste Förderwelle 4.1 antrieben kann. Die zweite Förderwelle 4.2 wird über ein Zahnradpaar angetrieben, wovon das erste Zahnrad 14.1 auf der Ausgangswelle des Winkelgetriebes 13 sitzt und über ein zweites Zahnrad (nicht dargestellt, da verdeckt), welches mit dem ersten Zahnrad 14.1 gepaart ist, die zweite Förderwelle 4.2. gegenläufig antreibt.

Der Doppelmantel 9.1 der Förderwelle 4.1 wird über eine Drehdurchführung mit Heisswasser versorgt. Die Drehdurchführung umfasst einen feststehenden Zylinder 15.1 und zwei radiale Schnittstellen im Lagerzapfen 11a.1 der Förderwelle. Die erste radiale Schnittstelle 16a.1 der Drehdurchführung dient der Zuführung von Heizwassers zum Doppelmantel 9.1 und die zweite radiale Schnittstelle 16.1b der Rückführung des Heizwassers aus dem Doppelmantel 9.1. Die Flussrichtung des Wassers im Doppelmantel 9.1 ist die gleiche wie die Förderrichtung der Käsemasse, nämlich axial in Richtung Ausgangsöffnung 6. In der Mitte des Hohlschafts 8.1 befindet sich ein Rückführkanal 10, welcher mit dem Doppelmantel 9.1 kommuniziert und welcher das Wasser über die Drehdurchführung in ein nicht dargestelltes Wasserreservoir zurückführt, wo das abgekühlte Wasser wieder aufgeheizt wird.

Das Gehäuse 2 umfasst ebenfalls einen Doppel- bzw. einen Heisswassermantel 17, welcher die Innenmantelfläche der Kammer 3 umgibt, zur Temperierung respektive Erhitzung der Kammer 3 und der darin befindlichen Käsemasse. Er wird vorzugsweise vom gleichen Wasserreservoir wie die Förderwelle mit Wasser versorgt. Somit wird die Kammer 3 sowohl über die Doppelmäntel (nur Doppelmantel 9.1 ist sichtbar) der Hohlschäfte 8.1 und 8.2 der beiden Förderwellen 4.1 und 4.2 als auch über den Heisswassermantel 17 des Gehäuses erhitzt.

Die Figuren 2a - c zeigen schematisch und stark vereinfacht die Förderwellen 4.1 und 4.2 des ersten Ausführungsbeispiels der Erfindung in verschiedenen Ansichten. Fig. 2a zeigt eine Draufsicht der Förderwellen 4.1 und 4.2, Fig. 2b eine Seitenansicht, in welcher nur die erste Förderwelle 4.1 sichtbar ist, und Fig. 2c eine Vorderansicht der Förderwellen 4.1 und 4.2. Die Förderwellen 4.1 und 4.2 haben einen zylindrischen Hohlschaft 8.1, 8.2, auf welchem jeweils eine eingängige Wendelstruktur in Form einer durchgehenden Wendel 19.1, 19.2 angebracht bzw. aufgeschweisst ist, d. h. die Wendel dieses Ausführungsbeispiels umfassen jeweils einen einzigen durchgehenden Flügel.

Die erste Förderwelle 4.1, ist für einen rechtsdrehenden Betrieb konzipiert und hat daher eine linksdrehende Wendel 19.1. Die zweite Förderwelle 4.2 ist dagegen für den linksdrehenden Betrieb konzipiert und hat daher eine rechtsdrehende Wendel 19.2. Im eingebauten Zustand greifen die Wendeln 19.1 und 19. 2 ineinander ein. In Fig. 2c ist die bestimmungsgemässe Drehrichtung der Wellen dargestellt, welche den Transport der Käsemasse von der Einlassöffnung 5 zur Auslassöffnung 6 bewirkt. Dabei drehen die Förderwellen in eine Richtung, die bewirkt, dass von oben eingefüllter Käsebruch zuerst nach aussen transportiert wird.

Beide Förderwellen 4.1, 4.2 haben Wendeln mit insgesamt 13 ½ Umläufen, was einer Steigung von 150 mm entspricht. Es können jedoch auch Wendeln mit einer anderen Anzahl an Umläufen verwendet werden, wie zum Beispiel Wendeln mit 11 ½ Umläufen und einer Steigung von 190mm. Auf den ersten 9 Umläufen bezogen auf die Förderrichtung sind pro Umlauf 3 Metallplättchen 20.1 ,20.2 axial an die jeweilige Wendel 19.1, 19.2 geschweisst. Die Metallplättchen 20.1, 20.2 stellen Vorsprünge auf der jeweiligen Förderwelle 4.1, 4.2 dar und dienen dabei als Mitnahmemittel. Die Metallplättchen auf einem Wendelumlauf sind jeweils um 120° zueinander versetzt, so dass sie auf einer Förderwelle 3 drei um 120° versetzte Reihen bilden. Die Metallplättchen 20.1, 20.2 sind jeweils gleich gross und haben eine Hauptfläche von 40 x 25 mm, wobei die längere Seite mit 40 mm in axiale Richtung gerichtet ist. Die schmalere Seite mit 25mm ist radial zum Schaft 8,1 an der Wendel 19.1, 19.2 ausgerichtet, so dass sie in etwa mit dem äusseren Durchmesser der Wendel 19.1, 19.2 bündig ist. Die Dicke der Plättchen beträgt etwa 5 mm und ist so gewählt, dass sie eine ausreichende Stabilität aufweisen und gut an der Wendel befestigt werden können. Insgesamt umfasst jede Förderwelle 9 x 3 = 27 Metallplättchen. Die Metallplättchen 20.1 der ersten Förderwelle 4.1 sind auf der Seite der linksdrehenden Wendel 19.1 angeschweisst, welche in Richtung der Einlassöffnung 5 zeigt. Dagegen sind Metallplättchen 20.2 der zweiten Förderwelle 4.2 auf der Seite der rechtsdrehenden Wendel 20.2 angeschweisst, welche zur Auslassöffnung 6 zeigt.

Bei dieser Anordnung ist es vor allem vorteilhaft, dass die Metallplättchen 20.1 und 20.2 auf entgegengesetzten Seiten der jeweiligen Wendeln angeordnet sind.

In Fig. 2d ist der Schnitt AB in der Figur 1 dargestellt. Er zeigt insbesondere die Kontur des Gehäuses 2 der Vorrichtung 1. Dieses weist eine Förderwanne 39 und einen Deckel 40 auf, die zusammen den Innenmantel der vom Gehäuse 2 definierten länglichen Kammer 3 bilden. Der Deckel 40 schliesst die Kammer 3 dabei nach oben ab, in welcher die Förderwellen 4.1 und 4.2 drehbar gelagert sind. Das Gehäuse 2 mit Förderwanne 39 und Gehäuse 40 hat die Form eines allgemeinen senkrechten Hohlzylinders. Der Teil der Innenmantelfläche des Hohlzylinders, welcher von der Förderwanne 39 gebildet wird, folgt dem äusseren Umfang der Förderwellen 4.1 und 4.2 bzw. den bei Drehung der Förderwellen 4.1 und 4.2 gebildeten Einhüllenden der Förderwellen 4.1 und 4.2. Der Innenmantel 22 der Kammer 3 verläuft dementsprechend in den entsprechenden Abschnitten jeweils konzentrisch zu der benachbarten Förderwelle 4.1 oder 4.2. Er bildet ein erstes konzentrisches Segment 41.1, welches zur ersten Förderwelle 4.1 konzentrisch ist und ein zweites konzentrisches Element 41.2, welches zur zweiten Förderwelle 4.2 konzentrisch ist. Die konzentrischen Segmente 41.1 und 41.2 sind kreiszylindrisch und besitzen eine gemeinsame Berührlinie, welche mittig unterhalb den Drehachsen 18.1 und 18.2 liegt und parallel zu diesen verläuft. Der Deckel 40 ist auf der Unterseite flach ausgebildet. Die Übergänge zwischen den konzentrischen Segmente 41.1 und 41.2. und der flachen Unterseite des Deckels 40 sind kontinuierlich und fast tangential. Zwischen den Förderwellen und dem Deckel entsteht ein Freiraum 42, welcher gut für die Durchmischung der Käsemasse ist.

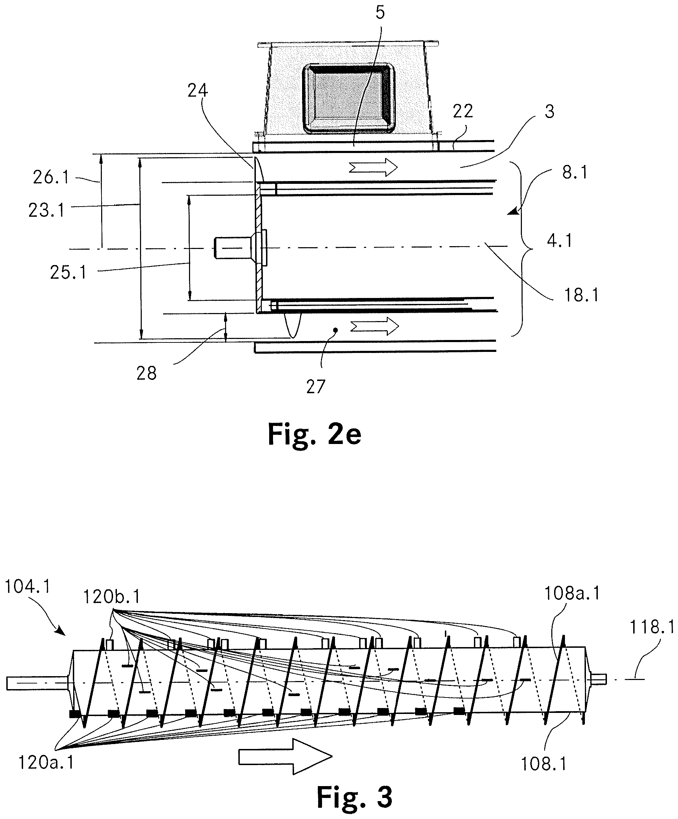

In Fig. 2e ist der zur Einlassöffnung gerichtete vordere Teil der Vorrichtung gemäss des ersten Ausführungsbeispiels der Erfindung im Seitenschnitt stark vereinfacht dargestellt, um die Grössenverhältnisse zwischen Kammer 3 und Förderwellen 4.1 und 4.2 zu illustrieren. Der Innenmantel 22 der Kammer 3 verläuft im Wesentlichen jeweils konzentrisch zur Einhüllenden der beiden Förderwellen bzw. jeweils zu den kreiszylindrischen Hohlschäften 8.1 und 8.2. Die Abmessungen der Förderwellen werden hier anhand der ersten Förderwelle 4.1 illustriert, da die zweite Förderwelle 4.2 im Wesentlichen die gleichen Abmessungen besitz. Der Aussendurchmesser der ersten Förderwelle 23.1 entspricht dem Aussendurchmesser der Wendel, von welcher in Fig. 2e der erste Umlauf schemenhaft dargestellt ist. Er beträgt 350 mm. Der Aussendurchmesser des Hohlschafts 25.1 beträgt 254 mm. Die konzentrischen Segmente des Innenmantels haben einen Radius 26.1 von 180 mm, was einem Durchmesser von 360 mm entspricht. Dieser ist somit nur geringfügig grösser als der Aussendurchmesser der Förderwelle 23.1 mit 350 mm. Somit bildet sich zwischen den Hohlschäften 8.1 und 8.2 und den kreisförmigen Segmenten des Innenmantels ein Förderkanal 27 für die Förderung der Käsemasse welcher in etwa eine Kanaldicke 28 von 53 mm aufweist.

Fig. 3 ist eine schematische Seitenansicht der ersten Förderwelle 104.1 eines zweiten Ausführungsbeispiels der Erfindung. Diese Förderwelle 104.1 ist weitgehend identisch zur ersten Förderwelle 4.1 des ersten Ausführungsbeispiels. Im Gegensatz zur Förderwelle 4.1 des ersten Ausführungsbeispiels sind die Metallplättchen 120a.1 und 120b.1 bei diesem Ausführungsbeispiel nicht nur axial an die Wendel 119.1 geschweisst, sondern auch radial an den zylindrischen Hohlschaft 108.1. Pro Wendelumlauf ist jeweils ein Metallplättchen 120a.1 pro Wendelumlauf axial an die Wendel geschweisst, und zwar auf der Seite von welcher die Käsemasse zugeführt wird. Zudem sind auch Metallplättchen 120b.1 radial am Hohlschaft 108.1 der Förderwelle 104.1 angeschweisst. Es werden dabei jeweils Metallplättchen mit einer Hauptfläche von 40 $\times$ 25 mm verwendet. Bei den radial angeordneten Metallplättchen 120b.1 weisst die längere Seite mit 40 mm in radiale Richtung, während die kürzere Seite mit 25 mm in axiale Richtung zeigt. Bei den axial angeordneten Metallplättchen 120a.1 weisst die längere Seite mit 40 mm in axiale Richtung, während die kürzere Seite mit 25 mm in radiale Richtung zeigt, also die Richtung der Drehachse 118.1.

In diesem Ausführungsbeispiel sind die radial angeordneten Metallplättchen 120b.1 nicht gleichmässig über den Umfang verteilt, sondern in unregelmässigen Abständen. Es ist jedoch auch möglich, die Metallplättchen gleichmässig über den Umfang zu verteilen. Die axial angeordneten Metallplättchen 120a.1 sind regelmässig angeordnet, so dass sie entlang der Förderwelle in einer Reihe aufgereiht sind.

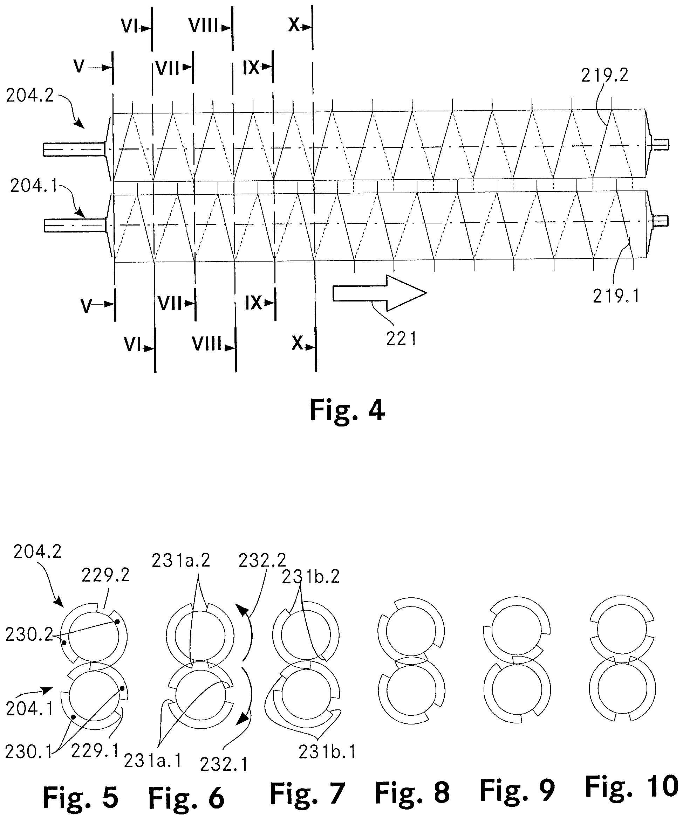

Fig. 4 zeigt eine schematische Draufsicht eines Förderwellenpaars eines dritten Ausführungsbeispiels der Erfindung. Das Förderwellenpaar umfasst eine erste Förderwelle 204.1 und eine zweite Förderwelle 204.2 Die Flügel der Wendelstrukturen der ersten Förderwelle 204.1 und der zweiten Förderwelle 204.2 sind jeweils radial unterbrochen, so dass die Wendelstrukturen pro Umlauf ungefähr zwei Flügel aufweisen. Die in Figur 4 eingezeichneten sechs äquidistanten Querschnitte V - X (römische Zahlen) sind in den Figuren 5 - 10 dargestellt. Die Schnitte wurden in einem axialen Abstand ausgeführt, welcher jeweils einem Umlauf der Wendeln 219.1 und 219.2 der ersten und zweiten Förderwelle 4.1 und 4.2 entspricht.

Die Figuren 5 - 10 zeigen die Unterbrüche 229.1, 229.2 in den Flügeln der ersten - und der zweiten Förderwelle. Sie Unterbrüche unterteilen die Wendeln der beiden Förderwellen 219.1 und 219.2 in jeweils zwei Flügel 230.1 und 230.2 pro Wendelumlauf. Aus Gründen der Übersichtlichkeit werden die Bezugszeichen für gleiche Teile nicht für jede Figur wiederholt, sondern jeweils nur einmal gemeinsam für alle Figuren 5 - 10 eingeführt. Die Unterbrüche zwischen zwei aufeinander folgenden Schnitten sind im Schnitt um etwa 20 Grad versetzt. Die Winkelposition der Unterbrüche 229.1 der ersten Förderwelle 204.1 verschiebt sich im Uhrzeigersinn mit der axialen Position in Förderrichtung. Entsprechend verschiebt sich die Winkelposition der Unterbrüche 229.2 der zweiten Förderwelle 204.2 im Gegenuhrzeigersinn mit der axialen Position in Förderrichtung.

Die Unterbrüche 229.1 und 229.2 bewirken, dass die Käsemasse bei Drehung der Förderwellen mindestens teilweise mit dieser mitrotiert. Sie dienen daher als Mitnahmemittel. Die axial geförderte Käsemasse fliesst nicht nur entlang der Wendel, sondern auch durch die Unterbrüche 229.1 und 229.2, die die Käsemasse dann in Drehrichtung der Förderwellen mitnehmen. Dabei unterstützen insbesondere die in Drehrichtung zeigenden Kanten 231a.1 und 231a.2 der Flügel 230.1 und 230.2 die Mitnahme von Käsemasse. Die bestimmungsgemässe Drehrichtung ist durch die Pfeile 232.1 und 232.2 angegeben. Zudem können die in Drehrichtung zeigenden Kanten 231a.1, 231a.2 als auch die nicht in Drehrichtung zeigenden Kanten 231b.1, 231b.2 so gestaltet sein, dass sie die Mitnahme der Käsemasse weiter verbessern, indem sie beispielsweise axial hervorstehende Elemente aufweisen.

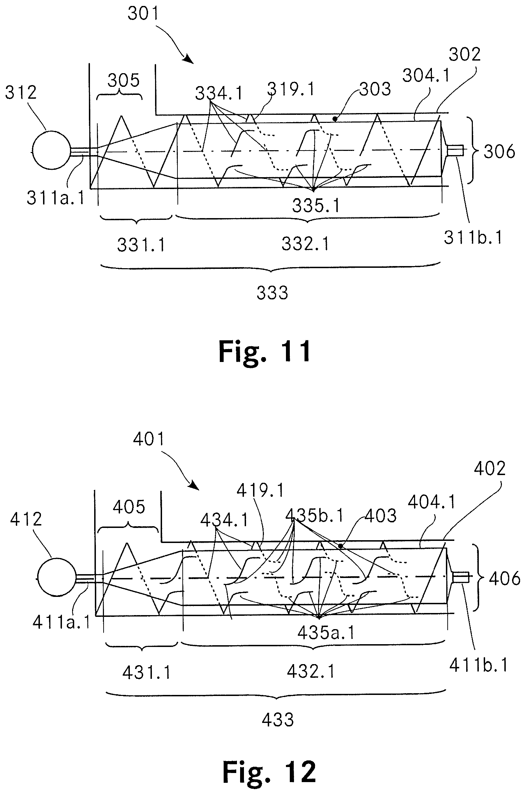

Fig. 11 zeigt in einer schematischen und stark vereinfachten Seitenansicht ein viertes Ausführungsbeispiel der erfinderischen Vorrichtung 301. Das Gehäuse 302 der Vorrichtung umfasst eine Einlassöffnung 305 und eine Auslassöffnung 306. In der länglichen Kammer 303 des Gehäuses 302 befinden sich eine erste Förderwelle 304.1 und eine zweite Förderwelle, welche auf der Abbildung jedoch nicht sichtbar ist. Beide Förderwellen sind mittels zweier Lagerzapfen drehbar gelagert. Die erste Förderwelle 304.1 wird mittels eines Elektromotors 312 angetrieben. Die zweite nicht sichtbare Förderwelle ist über ein nicht dargestelltes Getriebe mit dem Elektromotor so gekoppelt, dass sie gegenläufig zur ersten Förderwelle dreht. Im Folgenden wird nur die erste Förderwelle 304.1 beschrieben, da die zweite Förderwelle im Wesentlichen gleich ist und sich im Wesentlichen nur durch die Umlaufrichtung der Wendel unterscheidet. Die erste Förderwelle 304.1 umfasst zwischen dem vorderen und hinteren Lagerzapfen 311a.1 und 311b.1 einen Schaft, welcher in einen konischen Schaftabschnitt 331.1 und einen kreiszylindrischen Schaftabschnitt 332.1 aufgeteilt ist. Der konische Schaftabschnitt 331.1 ist zum Einlassbereich hin bzw. zum vorderen Lagerzapfen 311a.1 hin verjüngt und geht in Richtung zur Auslassöffnung 306 in den kreiszylindrischen Schaftabschnitt 332.1 über. Am Umfang des Schafts ist eine Wendel 319.1 angeordnet, deren Einhüllende, die sich bei Drehung der Wendel ergibt, im Wesentlichen kreiszylindrisch ist.

Die Länge des konischen Schaftabschnitts 331.1 beträgt in diesem Ausführungsbeispiel etwa ¼ des axialen Förderwegs 333, welcher sich aus dem axialen Abstand des vordersten Punkt der Einlassöffnung 305 und dem Mittelpunkt der Auslassöffnung 306 ergibt. Der im Bereich der Einlassöffnung kleinere Schaftdurchmesser ermöglicht eine gleichmässigere Bestückung der Kammer mit Käsebruch.

Im Bereich des kreiszylindrischen Schaftabschnitts 332.1 ist die Wendel 319.1 unterbrochen und weist mehrere gebogene Flügel 334.1 auf. Die gebogenen Flügel 334.1 weissen axial in Richtung der Auslassöffnung 306 gebogene Flügelabschnitte 335.1 auf. Hierbei ist die Seitenkante des Flügels gebogen, welche bei bestimmungsgemässer Drehrichtung nacheilend ist. Der gebogene Flügelabschnitt bildet jeweils einen Vorsprung, welcher Käsemasse in Rotationsrichtung mitnimmt und bewirkt, dass Käsemasse um die Förderwelle 304.1 herum transportiert wird.

Fig. 12 zeigt in einer schematischen und stark vereinfachten Seitenansicht ein fünftes Ausführungsbeispiel der erfinderischen Vorrichtung 401. Das Ausführungsbeispiel ist sehr ähnlich wie das vierte Ausführungsbeispiel und unterscheidet sich von diesem nur durch die Ausgestaltung der Wendeln der in der länglichen Kammer des Gehäuses 402 drehbar gelagerten Förderwellen. Entsprechende Komponenten des fünften Ausführungsbeispiels tragen die um die Zahl hundert erhöhten Bezugszeichen des vierten Ausführungsbeispiels.

Die Schaftform des Förderwellenpaars dieses Ausführungsbeispiels, von denen wiederum nur die erste Förderwelle 404.1 in Fig. 12 sichtbar ist, ist dieselbe wie die Schaftform des vierten Ausführungsbeispiels, d. h. der Schaft der Förderwelle umfasst einen konischen Schaftabschnitt 431.1 und einen kreiszylindrischen Schaftabschnitt 432.1. Der konische Schaftabschnitt 431.1 ist zum Einlassbereich hin bzw. zum vorderen Lagerzapfen 411a.1 hin verjüngt und geht in Richtung zur Ausgangsöffnung 406 direkt, also ohne Stufe, in den kreiszylindrischen Schaftabschnitt 4321.1 über.

Die Form der Wendeln dieses Ausführungsbeispiel wird nun anhand der in Fig. 12 dargestellten ersten Förderwelle 404.1 beschrieben. Die Wendel 419.1 weist ab dem zweiten Wendelumgang Unterbrüche auf und ist in mehrere Flügel 434.1 unterteilt. Im Gegensatz zum vorhergehenden Ausführungsbeispiel weisen die Flügel 434.1 nicht nur axial in Richtung der Auslassöffnung 406 gebogene Flügelabschnitte 435a.1 auf, sondern auch axial in Richtung der Einlassöffnung 405 gebogene Flügelabschnitte 435b.1. Die in Richtung der Auslassöffnung 406 gebogenen Flügelabschnitte 435a.1 sind wie im dritten Ausführungsbeispiel jeweils auf der Seitenkante des Flügels gebogen, welche bei bestimmungsgemässer Drehrichtung nacheilend ist. Dagegen sind die Flügelabschnitte 435b.1, welche in Richtung der Einlassöffnung 405 gebogenen sind, bei bestimmungsgemässer Drehrichtung jeweils auf der vorauseilenden Seitenkante des entsprechenden Flügels gebogen.

Sowohl die zur Einlassöffnung 405 hin gebogenen Flügelabschnitte 435b.1 als auch die zur Auslassöffnung 435a.1 hin gebogenen Flügelabschnitte bilden jeweils Vorsprünge, welche Käsemasse in Rotationsrichtung mitnehmen und es so ermöglichen, dass die Käsemasse in der Kammer 403 um die Förderwelle 404.1 herum transportiert und nicht nur axial in Förderrichtung 433 transportiert wird.

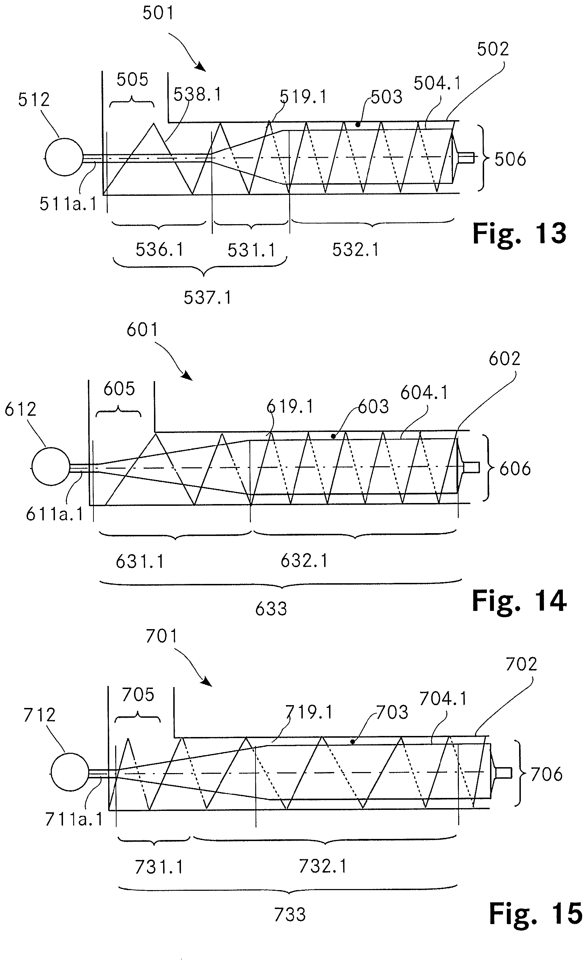

Fig. 13 zeigt eine Vorrichtung 501 gemäss eines sechsten Ausführungsbeispiels der Erfindung. Sie unterscheidet sich von den Vorrichtung 301 und 401 gemäss des vierten und fünften Ausführungsbeispiels wiederum nur durch die Ausgestaltung des Förderwellenpaars. Entsprechende Teile weissen um die Zahl zweihundert erhöhte Bezugszeichen im Vergleich zum dritten Ausführungsbeispiel auf.

Wiederum wird nur die erste Förderwelle 504.1 beschrieben, da die zweite im Wesentlichen gleich wie die erste Förderwelle ausgestaltet ist und sich von der ersten Förderwelle im Wesentlichen nur dadurch unterscheidet, dass ihre Wendelstruktur nicht linksdrehend sondern rechtsdrehend ist.

Die erste Förderwelle 504.1 umfasst zwischen dem vorderen Lagerzapfen 511a.1 und dem konischen Abschnitt 531.1 zusätzlich einen weiteren kreiszylindrischen Schaftabschnitt 536.1, welcher stufenlos in den konischen Schaftabschnitt 531.1 übergeht. Der kreiszylindrische Schaftabschnitt 536.1 und der konische Schaftabschnitt 531.1 bilden den verjüngten Schaftbereich 537.1 der Förderwelle 504.1. Der im Bereich der Einlassöffnung 505 äusserst kleinere Schaftdurchmesser ermöglicht eine besonders gleichmässige Bestückung der Kammer 503 mit Käsebruch.

Zudem ist die Steigung der Wendel 519.1 der Förderwelle 504.1 nicht konstant, sondern im Bereich der Einlassöffnung 505 grösser. Das bedeutet, dass im Bereich der Einlassöffnung 505 der axiale Abstand zwischen zwei Wendelumläufen grösser ist. Die Steigung des ersten Wendelumlaufs 538.1 ist somit am grössten. Sie verringert sich im verjüngten Schaftbereich 537.1 in Richtung der Auslassöffnung 506 kontinuierlich. Am Übergang zwischen dem konischen Schaftbereich 531.1 und dem nicht verjüngten, kreiszylindrischen Schaftabschnitts 532.1 erreicht sie den kleinsten Wert und bleibt ab dort konstant. Auf etwa der ersten Hälfte des Förderwegs 533 ist die Steigung grösser und der Schaftdurchmesser kleiner als am kreiszylindrischen Schaftbereich 532.1. Die grössere Steigung im Bereich der

Einlassöffnung bewirkt eine gleichmässige Durchmischung der Käsemasse in diesem Bereich. Anstelle von kontinuierlichen, stufenlosen Steigungsübergängen sind prinzipiell auch diskontinuierliche Steigungsübergänge möglich, jedoch sind kontinuierliche stufenlose Übergänge vorteilhaft für das Flussverhalten der Käsemasse.

Die in Fig. 14 in der Seitenansicht schematisch skizzierte Vorrichtung 601 gemäss des siebten Ausführungsbeispiels der Erfindung unterscheidet sich von der Vorrichtung 501 des sechsten Ausführungsbeispiels der Erfindung nur durch die Ausgestaltung der Schäfte der Förderwellen. Entsprechende Komponenten in Fig. 14 weissen um die Zahl dreihundert erhöhte Bezugszeichen im Vergleich zum dritten Ausführungsbeispiel auf, welches in Fig. 11 dargestellt ist.

Wiederum wird nur die erste Förderwelle 604.1 beschrieben. Diese weist, entsprechend des vierten und fünften Ausführungsbeispiels einen verjüngten konischen Abschnitt 631.1 und einen kreiszylindrischen Schaftabschnitt 632.1 auf. Allerdings beträgt hier die Länge des konischen Schaftabschnitts 631.1 etwa 40% der Länge des axialen Förderwegs 633.

Auch in diesem Ausführungsbeispiel ist die Steigung der Wendel 619.1 der Förderwelle im Bereich der Einlassöffnung 605 und im Bereich des konischen Schaftabschnitts 631.1 grösser als im Bereich des kreiszylindrischen Schaftabschnitts 632.1, in welchem die Steigung der Wendel 619.1 weitgehend konstant ist.

Fig. 15 zeigt eine Vorrichtung 701 gemäss eines achten Ausführungsbeispiels der Erfindung in einer schematischen Seitenansicht. Teile in Fig. 15, welche den Teilen der Vorrichtung 301 des vierten Ausführungsbeispiels entsprechen, weissen um die Zahl vierhundert erhöhte Bezugszeichen im Vergleich zur Fig. 11 auf. Die Vorrichtung 701 unterscheidet sich von der Vorrichtung 601 gemäss des siebten Ausführungsbeispiels ausschliesslich durch die Form der Wendeln der Förderwellen.

Die Steigung der Wendel 719.1 der ersten Förderwelle 704.1 ist bei diesem Ausführungsbeispiel am kleinsten in der Nähe der Einlassöffnung 705 und im Bereich der Auslassöffnung 706. Sie nimmt gegen die Mitte der länglichen Kammer 703 des Gehäuses 702 bzw. gegen die Mitte des Förderwegs 733 hin zu, d. h. der axiale Abstand zwischen benachbarten Umläufen der Wendel wird zur Kammermitte hin grösser. Die zweite, hier nicht dargestellte Förderwelle ist entsprechend ausgestaltet, weist aber eine rechtsdrehende anstelle einer linksdrehenden Wendel 719.1 auf.

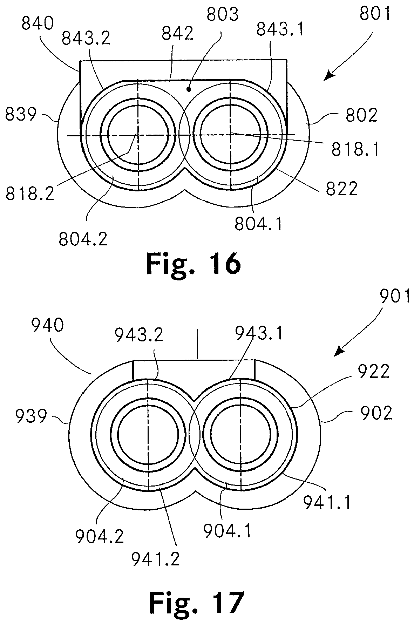

Fig. 16 zeigt eine Schnittansicht der Vorrichtung 801 gemäss eines neunten Ausführungsbeispiels der Erfindung. Die Vorrichtung 801 entspricht weitgehend der ersten Ausführungsform, unterscheidet sich von dieser aber durch einen unterschiedlichen Querschnitt des Gehäuses 802, welches die Förderwanne 839 und den Deckel 840 umfasst. Der in Fig. 16 dargestellte Schnittdarstellung stellt einen zu Fig. 2d analogen Schnitt dar, welcher sich auf die in Fig. 1 gekennzeichnete Schnittebene AB bezieht.

Die Unterseite des Deckels 840 und die Innenseite der Förderwanne 839 bilden den Innenmantel 822 der Kammer 803, in welcher die Förderwellen 804.1 und 804.2 drehbar gelagert sind. Die Unterseite des Deckels weist in der Mitte einen ebenen Abschnitt 842 auf, welcher gegen die beiden Aussenseiten des Deckels hin tangential in kreiszylindrische Segmente 843.1 und 843.2 übergeht. Diese kreiszylindrischen Segmente 843.1 und 843.2 schliessen dabei tangential an die nicht vom Deckel gebildeten konzentrischen Segmente 841.1 und 841.2 der Förderwanne 839 an, welche konzentrisch zu den jeweiligen Förderwellen 804.1 und 804.2 verlaufen. Der Übergang zwischen Deckel und Förderwanne am Innenmantel ist dabei in der gemeinsamen Ebene angeordnet, in welcher die Drehachsen 818.1 und 818.2 liegen. Der Deckel 840 kann so die Förderwellen 804.1 und 804.2 in der gesamten Breite abdecken. Die grosse Deckelbreite verbessert die Zugänglichkeit der Kammer.

Durch diese Ausführungsform entsteht ebenso wie bei einem flachen Deckel ein zusätzliches Volumen zwischen den Einhüllenden der Förderwellen 804.1 und 804.2 und dem Deckel 840. Das ermöglicht eine bessere Durchmischung der Käsemasse in der Kammer.

Fig. 17 zeigt eine Schnittansicht der Vorrichtung 901 gemäss einem zehnten Ausführungsbeispiel der Erfindung. Die Vorrichtung 901 entspricht weitgehend derjenigen ersten Ausführungsform, unterscheidet sich von dieser aber dadurch, dass der Deckel 940 des Gehäuses 902 an der Unterseite nicht eben ausgebildet ist, sondern, dass dessen Unterseite durch zwei kreiszylindrische Segmente 943.1 und 943.2 gebildet wird, welche bei geschlossenen Deckel zu den beiden Förderwellen 904.1 und 904.2 konzentrisch sind und tangential an die zu den Förderwellen 904.1 und 904.2 konzentrischen Segmente 941.1 und 941.2 der Förderwanne 939 anschliessen. Somit umhüllt der von Förderwanne und dem Deckel 940 gebildete Innenmantel 922 beide Förderwellen 904.1 und 904.2. Es verbleibt somit noch ein minimaler Spalt zwischen der Einhüllenden der Förderwellen und dem Innenmantel. Dadurch ist eine optimale Beheizung der Käsemasse möglich, welche zwischen dem Innenmantel und den Förderwellen 904.1 und 904.2 befördert wird.

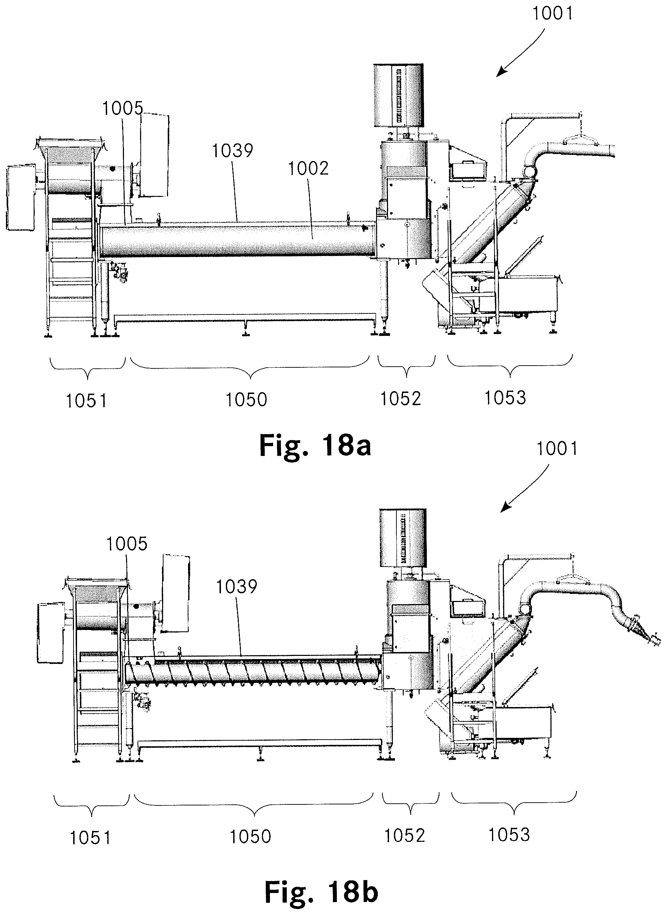

Fig. 18a und 18b zeigen eine Vorrichtung 1001 zum kontinuierlichen Fördern und Plastifizieren von Käsebruch, gemäss einem elften Ausführungsbeispiel der Erfindung. Fig. 18a zeigt die Vorrichtung 1001 in einer Seitenansicht und Fig. 18b in einer Seitenansicht, in welcher vom beheizbaren Gehäuse 1002 nur der Deckel 1040 dargestellt ist. Die Vorrichtung 1001 umfasst neben der Filiereinheit bzw. indirekten Kocher 1050 mit dem beheizbaren Gehäuse 1002 und den beheizbaren Förderwellenpaar auf der Seite der Einlassöffnung 1005, einen Schnitzler 1051, welcher den Käsebruch in Schnitzel definierter Grösse bereitstellt und die vom Gehäuse 1002 gebildete beheizbare Kammer der Vorrichtung über die Einlassöffnung 1005 mit geschnetzeltem Käsebruch versorgt. Die Vorrichtung 1001 umfasst zudem auf der Austrittsseite eine Knetvorrichtung 1052 sowie einen Schneckenförderer 1053 zur weiteren Verarbeitung, beispielsweise einen Trockensalzer oder einen Former.

Um die Wirkung der Mitnahmemittel zu belegen, wurden Vergleichsversuche durchgeführt. Versuch 1 wurde auf einer erfinderischen Vorrichtung zum Fördern und Plastifizieren von Käsebruch durchgeführt, deren Förderwellen mit Metallplättchen von 40 x 25 mm ausgestattet waren. Die bei Versuch 1 verwendete Vorrichtung unterschied sich von der Vorrichtung 1 des ersten Ausführungsbeispiels gemäss Fig. 1 lediglich darin, dass die Steigung der Wendel 190 mm anstelle von 150 mm betrug und entsprechend die Anzahl der Wendelumläufe von 13 ½ auf 11 ½ reduziert war. Versuch 2 wurde auf der gleichen Vorrichtung durchgeführt, wobei die Förderwellen jedoch keine Metallplättchen aufwiesen.

Bei beiden Versuchen wurden bei laufender Produktion jeweils die Förderwellen gestoppt und der jeweils flache Gehäusedeckel geöffnet, um den Zustand der Käsemasse in der Kammer der Vorrichtung per Augenschein zu beurteilen.

Versuch 1 hat ergeben, dass der zu plastifizierende Käsebruch bzw. die Käsemasse mit der Förderwelle aufgrund der Metallplättchen 20.1 mitrotiert hat. So hat sich in Versuch 1 die Käsemasse die Förderwellen im Wesentlichen über die ganze Breite bedeckt und dabei die Förderwanne komplett gefüllt.

In Versuch 2 wurde dagegen der sich in der Kammer der Maschine befindliche zu plastifizierende Käsebruch nur nach vorne geschoben. Der Käsebruch hatte sich entsprechend ausschliesslich zwischen den beiden in der Kammer drehbar gelagerten Förderwellen angesammelt. Er ist somit nicht um die Förderwellen herum transportiert worden. Somit ist im Versuch 2 auch kein Quertransport erfolgt.

Die Oberfläche der Käsemasse in Versuch 1 war deutlich glatter als diejenige der Käsemasse in Versuch 2, was ein Beleg dafür ist, dass der Käse in Versuch 1 deutlich besser geschmolzen war.

Zusammenfassend ist festzustellen, dass die Erfindung eine Vorrichtung und ein Verfahren schafft, welches das Fördern und Plastifizieren von Käsebruch ohne Abwasser- und Käsebestandteilverluste ermöglicht, welches aber einer ähnliche Qualität wie ein traditionellen Wasserfilierer erreicht.

**Patentansprüche**

1. Vorrichtung (1) zum kontinuierlichen Fördern und Plastifizieren von Käsebruch, insbesondere für die Herstellung von Pasta-Filata-Käse, umfassend:

   a) ein Gehäuse (2) mit einer länglichen Kammer (3) mit einer Einlassöffnung (5) und einer Auslassöffnung (6),
   b) mindestens ein Paar in der Kammer (3) angeordneter gegenläufig antreibbarer Förderwellen (4.1, 4.2), deren parallele Drehachsen (18.1, 18.2) in Längsrichtung zur Kammer (3) verlaufen,
   c) wobei die Förderwellen jeweils einen Schaft (8.1, 8.2) mit einem kreiszylindrischen Schaftabschnitt sowie jeweils eine am Umfang des Schafts (8.1, 8.2) angeordnete wendelförmige Struktur (19.1, 19.2) mit einer oder mehreren Wendelgängen zur axialen Förderung des Käsebruchs von der Einlassöffnung (5) zur Auslassöffnung (6) besitzen und die wendelförmigen Strukturen (19.1, 19.2) beider Förderwellen (4.1, 4.2) ineinander eingreifen,
   d) ein Antriebsmittel (12) zum gegenläufigen Antreiben der Förderwellen,
   e) sowie eine Heizvorrichtung (9.1, 17), welche mindestens einen Teil des Schafts (8.1, 8.2) und mindestens einen Teil einer Innenmantelfläche (22) der Kammer (3) erhitzen kann,
   **dadurch gekennzeichnet, dass**
   f) die Förderwellen (4.1, 4.2) mindestens ein Mitnahmemittel (20.1, 20.2) aufweisen, welches so ausgelegt ist, dass der zu fördernde und zu plastifizierende Käsebruch im Betrieb mindestens teilweise auch um die beiden Förderwellen (4.1, 4.2) herum transportiert wird.

2. Vorrichtung (1) nach Anspruch 1, wobei das Mitnahmemittel einen Vorsprung (20.1, 335.1) auf der Förderwelle (4.1) umfasst.

3. Vorrichtung (1) nach Anspruch 2, wobei das Mitnahmemittel einen Vorsprung (335.1) auf der Förderwelle (4.1) umfasst, der durch ein auf der Förderwelle (4.1) angebrachtes Element (20.1) ausgebildet ist, wobei das auf der Förderwelle (4.1) angebrachte Element ein flächiges Element mit mindestens einer Hauptfläche ist, die so ausgerichtet ist, dass Umfangslinien der Drehachse (18.1) der Förderwelle (4.1) im Wesentlichen senkrecht zur Hauptfläche stehen, wobei das flächige Element insbesondere eine Platte (20.1) ist.

4. Vorrichtung (1) nach Anspruch 3, wobei das Element (20.1) an der Wendelstruktur (19.1) und/oder am Schaft (8.1) angeordnet ist.

5. Vorrichtung (1) nach wenigstens einem der vorangehenden Ansprüche, wobei mindestens ein Wendelgang durchgehende Flügel aufweist und/oder wobei mindestens ein Wendelgang unterbrochene und/oder gebogene Flügel (230.1, 334.1) aufweist.

6. Vorrichtung (1) nach den Anspruch 5, wobei das Mitnahmemittel einen Vorsprung (335.1) auf der Förderwelle (4.1) umfasst, der durch eine Flügelkante (231a.1) eines unterbrochenen Flügels (230.1) und/oder durch einen gebogenen Flügelabschnitt (335.1) des gebogenen Flügels gebildet wird.

7. Vorrichtung (1) nach wenigstens einem der vorhergehenden Ansprüche, wobei eine Innenmantelfläche (22) der länglichen Kammer (3) ein Segment umfasst (41.1), das zu einer der beiden Förderwellen (4.1) im Wesentlichen konzentrisch ist, und ein zweites Segment (41.2), dass zur anderen der beiden Förderwellen (4.2) im Wesentlichen konzentrisch ist und wobei der radiale Abstand des kreiszylindrischen Schaftabschnitts der entsprechenden Förderwelle (4.1, 4.2) zum jeweiligen Segment (41.1, 41.2) der Innenmantelfläche (22) der Kammer (3) <= 70 mm, in bevorzugter Weise ≤ 60 mm, im Besonderen ≤ 50 mm, besonders bevorzugt ≤ 40 mm oder < 30 mm ist.

8. Vorrichtung (901) nach Anspruch 7, wobei das Gehäuse (902) einen Deckel umfasst, welcher die Kammer abschliesst und einen Teil der Innenmantelfläche (922) bildet, wobei der Deckel (902) vorzugsweise Abschnitte der konzentrischen Segmente (943.1, 943.2) der Innenmantelfläche (922) bildet und sich diese vom Deckel gebildeten Abschnitte der zu den beiden Förderwellen konzentrischen Segmente der Innenmantelfläche (922) berühren (943.1, 943.2).

9. Vorrichtung (901) nach wenigstens einem der Ansprüche 7 und 8, wobei die zu den jeweiligen Förderwellen konzentrischen Segmente (943.1, 943.2) der Innenmantelfläche (922) so miteinander verbunden sind, dass sie die Förderwellen (904.1, 904.2) komplett umschliessen.

10. Vorrichtung (1) nach wenigstens einem der vorhergehenden Ansprüche, wobei die längliche Kammer (3) im Wesentlichen horizontal ausgerichtet ist.

11. Vorrichtung (1) nach wenigstens einem der vorhergehenden Ansprüche, wobei die wendelförmigen Strukturen (19.1, 19.2) beider Förderwellen (4.1, 4.2) so konfiguriert sind, dass bei einer gegenläufiger Drehrichtung der Förderwellen (4.1, 4.2), bei welcher die vertikalen Tangentialgeschwindigkeitskomponenten der Förderwellen (4.1, 4.2) zwischen den Drehachsen nach oben gerichtet sind, eine axiale Förderung des Käsebruchs von der Einlassöffnung (5) zur Auslassöffnung (6) bewirkt wird.

12. Vorrichtung (601) nach wenigstens einem der vorhergehenden Ansprüche, wobei der Schaft einen zur Einlassöffnung (605) gerichteten sich verjüngten Abschnitt (631.1) umfasst, welcher vorzugsweise maximal ⅓ der Länge L eines axialen Förderwegs, besonders bevorzugt maximal ¼ der Länge L des axialen Förderwegs (633) beträgt, und/oder wobei das Verhältnis L/D zwischen der Länge L des axialen Förderwegs und einem Aussendurchmesser D der Förderwellen etwa 1 - 20 beträgt, vorzugsweise 2 - 15, im Besonderen 4 - 12 oder 4 - 8.

13. Vorrichtung (601) nach einem der vorhergehenden Ansprüche, bei welcher die Wendelgänge Abschnitte unterschiedlicher Steigung aufweisen.

14. Vorrichtung (1) nach wenigstens einem der vorhergehenden Ansprüche, bei welcher jeweils die Förderwellen (4.1, 4.2) insbesondere die Schäfte (8.1, 8.2) der Förderwellen (4.1, 4.2), und das Gehäuse (2) Fluidkanäle (9.1, 10, 17) für die Erhitzung der Kammer (3) umfassen, wobei die Fluidkanäle (9.1, 10, 17) Bestandteil der Heizvorrichtung sind und sich im Wesentlichen entlang des gesamten axialen Förderwegs (33) erstrecken und/oder bei welcher die Heizvorrichtung so konfiguriert ist, dass die Temperaturdifferenz zwischen dem zugeführten Fluid und dem abgeführten Fluid sich um weniger als 10°C, vorzugsweise weniger als 5° oder weniger als 2°C unterscheidet und/oder die Fluidtemperatur im Vorlauf kleiner 90°C, besonders bevorzugt zwischen 75 und 85° ist.

15. Verfahren zum kontinuierlichen Fördern und Plastifizieren von Käsebruch, insbesondere für Pasta-Filata-Käse,

    a) Beschicken der Vorrichtung (1) gemäss einem der vorhergehenden Ansprüche 1 - 14 mit Käsebruch als Ausgangsmaterial über die Einlassöffnung (5),
    b) fördern des zu plastifizierenden Käsebruchs entlang eines Förderwegs (33) zwischen der Einlassöffnung (5) und einer Auslassöffnung (6) der Vorrichtung (1) durch gegenläufiges Antrieben der Förderwellen (4.1,4.2), vorzugsweise mit einer Drehzahl zwischen 0.5 und 25 U/min, besonders bevorzugt zwischen 1 - 10 U/min und
    c) beheizen der Innenmantelfläche (22) der Kammer (3) und der Förderwellen (4.1, 4.2) mit der Heizvorrichtung so dass der Käsebruch an der Auslassöffnung (6) eine Temperatur von 50°-70°, bevorzugter Weise von 55°C-65°C erreicht, wobei der Käsebruch kontinuierlich plastifiziert wird, **dadurch gekennzeichnet,**
d) **dass** der kontinuierlich zu fördernde Käsebruch nicht nur axial in Förderrichtung (21), sondern auch um die Förderwellen (4.1, 4.2) herum transportiert wird.

16. Verfahren nach Anspruch 15, wobei das Verhältnis der beheizten Oberflächen der Schäfte (8.1, 8.2) der Förderwellen (4.1, 4.2) und der Oberfläche des Innenmantels (22) zum Volumen des sich in der Kammer (3) befindliche zu befördernden Käsebruchs $\geq 33$ m$^{-1}$, besonders bevorzugt $\geq 40$ m$^{-1}$, im Besonderen $\geq 50$ oder $60$ m$^{-1}$ ist.

**Claims**

1. A device (1) for continuously conveying and plasticizing cheese curd, in particular for the production of pasta filata cheese, comprising:

   a) a housing (2) having an elongate chamber (3) with an inlet opening (5) and an outlet opening (6),
   b) at least one pair of conveying shafts (4.1, 4.2) which are arranged in the chamber (3), can be driven in opposite directions and the parallel axes of rotation (18.1, 18.2) of which run in the longitudinal direction with respect to the chamber (3),
   c) wherein the conveying shafts each have a shank (8.1, 8.2) with a circular-cylindrical shank section and in each case a helical structure (19.1, 19.2), which is arranged on the circumference of the shank (8.1, 8.2), with one or more helical turns for axially conveying the cheese curd from the inlet opening (5) to the outlet opening (6), and the helical structures (19.1, 19.2) of the two conveying shafts (4.1, 4.2) engage in one another,
   d) a drive means (12) for driving the conveying shafts in opposite directions,
   e) and a heating device (9.1, 17) which can heat at least part of the shank (8.1, 8.2) and at least part of an inner circumferential surface (22) of the chamber (3),

   1. **characterized in that**
   f) the conveying shafts (4.1, 4.2) have at least one entraining means (20.1, 20.2) which is configured in such a manner that the cheese curd which is to be conveyed and to be plasticized is at least partially also transported around the two conveying shafts (4.1, 4.2) during operation.

2. The device (1) as claimed in claim 1, wherein the entraining means comprises a projection (20.1, 335.1) on the conveying shaft (4.1).

3. The device (1) as claimed in claim 2, wherein the entraining means comprises a projection (335.1) on the conveying shaft (4.1), said projection being formed by an element (20.1) attached to the conveying shaft (4.1), wherein the element attached to the conveying shaft (4.1) is a flat element with at least one main surface which is oriented in such a manner that circumferential lines of the axis of rotation (18.1) of the conveying shaft (4.1) are substantially perpendicular to the main surface, wherein the flat element is in particular a plate (20.1).

4. The device (1) as claimed in claim 3, wherein the element (20.1) is arranged on the helical structure (19.1) and/or on the shank (8.1).

5. The device (1) as claimed in at least one of the preceding claims, wherein at least one helical turn has continuous blades and/or wherein at least one helical turn has interrupted and/or bent blades (230.1, 334.1).

6. The device (1) as claimed in claim 5, wherein the entraining means comprises a projection (335.1) on the conveying shaft (4.1), said projection being formed by a blade edge (231a.1) of an interrupted blade (230.1) and/or by a bent blade section (335.1) of the bent blade.

7. The device (1) as claimed in at least one of the preceding claims, wherein an inner circumferential surface (22) of the elongate chamber (3) comprises a segment (41.1) which is substantially concentric with respect to one of the two conveying shafts (4.1), and a second segment (41.2) which is substantially concentric with respect to the other of the two conveying shafts (4.2), and wherein the radial distance of the circular-cylindrical shank section of the corresponding conveying shaft (4.1, 4.2) from the respective segment (41.1, 41.2) of the inner circumferential surface (22) of the chamber (3) is $\leq 70$ mm, preferably $\leq 60$ mm, in particular $\leq 50$ mm, particularly preferably $\leq 40$ mm or $< 30$ mm.

8. The device (901) as claimed in claim 7, wherein the housing (902) comprises a cover which closes the chamber and forms part of the inner circumferential surface (922), wherein the cover (902) preferably forms sections of the concentric segments (943.1, 943.2) of the inner circumferential surface (922), and said sections, which are formed by the cover, of the segments (943.1, 943.2) of the inner circumferential surface (922) that are concentric with respect to the two conveying shafts are in contact with one another.

9. The device (901) as claimed in at least either of claims 7 and 8, wherein the segments (943.1, 943.2) of the inner circumferential surface (922) that are concentric with respect to the respective conveying shafts are connected to one another in such a manner that they completely surround the conveying shafts (904.1, 904.2).

10. The device (1) as claimed in at least one of the preceding claims, wherein the elongate chamber (3) is oriented substantially horizontally.

11. The device (1) as claimed in at least one of the preceding claims, wherein the helical structures (19.1, 19.2) of the two conveying shafts (4.1, 4.2) are configured in such a manner that when the conveying shafts (4.1, 4.2) have an opposite direction of rotation, in which the vertical tangential speed components of the conveying shafts (4.1, 4.2) between the axes of rotation are directed upward, the cheese curd is conveyed axially from the inlet opening (5) to the outlet opening (6).

12. The device (601) as claimed in at least one of the preceding claims, wherein the shank comprises a tapered section (631.1) which is directed toward the inlet opening (605) and is preferably at maximum one third of the length L of an axial conveying path, particularly preferably at maximum one quarter of the length L of the axial conveying path (633) and/or wherein the ratio L/D between the length L of the axial conveying path and an outside diameter D of the conveying shafts is approximately 1 - 20, preferably 2 - 15, in particular 4 - 12 or 4 - 8.

13. The device (601) as claimed in one of the preceding claims, in which the helical turns have sections of differing pitch.

14. The device (1) as claimed in at least one of the preceding claims, in which in each case the conveying shafts (4.1, 4.2), in particular the shanks (8.1, 8.2) of the conveying shafts (4.1, 4.2), and the housing (2) comprise fluid channels (9.1, 10, 17) for heating the chamber (3), wherein the fluid channels (9.1, 10, 17) are part of the heating device and extend substantially along the entire axial conveying path (33) and/or in which the heating device is configured in such a manner that the temperature difference between the supplied fluid and the discharged fluid differs by less than 10°C, preferably less than 5° or less than 2°C, and/or the fluid temperature in the advance flow is less than 90°C, particularly preferably between 75 and 85°.

15. A method for continuously conveying and plasticizing cheese curd, in particular for pasta filata cheese,

   a) loading the device (1) as claimed in one of the preceding claims 1 - 14 with cheese curd as starting material via the inlet opening (5),
   b) conveying the cheese curd which is to be plasticized along a conveying path (33) between the inlet opening (5) and an outlet opening (6) of the device (1) by driving the conveying shafts (4.1, 4.2) in opposite directions, preferably at a rotational speed of between 0.5 and 25 rpm, particularly preferably between 1 - 10 rpm, and
   c) heating the inner circumferential surface (22) of the chamber (3) and the conveying shafts (4.1, 4.2) with the heating device such that the cheese curd at the outlet opening (6) reaches a temperature of 50°-70°, preferably 55°C-65°C, with the cheese curd being continuously plasticized,
   **characterized**
   d) **in that** the cheese curd which is to be conveyed continuously is transported not only axially in the conveying direction (21) but also around the conveying shafts (4.1, 4.2).

16. The method as claimed in claim 15, wherein the ratio of the heated surfaces of the shanks (8.1, 8.2) of the conveying shafts (4.1, 4.2) and of the surface of the inner circumference (22) to the volume of the cheese curd which is located in the chamber (3) and is to be conveyed is $\geq 33\ m^{-1}$, particularly preferably $\geq 40\ m^{-1}$, in particular $\geq 50$ or $60\ m^{-1}$.

**Revendications**

1. Dispositif (1) pour l'acheminement et la plastification en continu de lait caillé, notamment pour la fabrication de fromage à pâte filée, comprenant :

a) un boîtier (2) avec une chambre allongée (3) avec une ouverture d'entrée (5) et une ouverture de sortie (6),

b) au moins une paire d'arbres d'acheminement (4.1, 4.2) agencés dans la chambre (3), pouvant être actionnés en sens inverse, dont les axes de rotation parallèles (18.1, 18.2) s'étendent dans la direction longitudinale de la chambre (3),

c) les arbres d'acheminement possédant chacun une tige (8.1, 8.2) avec une section de tige cylindrique circulaire ainsi que chacun une structure hélicoïdale (19.1, 19.2) agencée sur la circonférence de la tige (8.1, 8.2) avec un ou plusieurs pas d'hélice pour l'acheminement axial du lait caillé de l'ouverture d'entrée (5) à l'ouverture de sortie (6) et les structures hélicoïdales (19.1, 19.2) des deux arbres d'acheminement (4.1, 4.2) s'engageant l'une dans l'autre,

d) un moyen d'actionnement (12) pour actionner les arbres d'acheminement en sens inverse,

e) ainsi qu'un dispositif de chauffage (9.1, 17) qui peut chauffer au moins une partie de la tige (8.1, 8.2) et au moins une partie d'une surface d'enveloppe intérieure (22) de la chambre (3),

**caractérisé en ce que**

f) les arbres d'acheminement (4.1, 4.2) présentent au moins un moyen d'entraînement (20.1, 20.2) qui est conçu de telle sorte qu'en fonctionnement, le lait caillé à acheminer et à plastifier est également transporté au moins partiellement autour des deux arbres d'acheminement (4.1, 4.2).

2. Dispositif (1) selon la revendication 1, le moyen d'entraînement comprenant une saillie (20.1, 335.1) sur l'arbre d'acheminement (4.1).

3. Dispositif (1) selon la revendication 2, le moyen d'entraînement comprenant une saillie (335.1) sur l'arbre d'acheminement (4.1), qui est formée par un élément (20.1) monté sur l'arbre d'acheminement (4.1), l'élément (20.1) monté sur l'arbre d'acheminement (4.1) étant un élément plat avec au moins une surface principale qui est dirigée de telle sorte que des lignes circonférentielles de l'axe de rotation (18.1) de l'arbre d'acheminement (4.1) sont essentiellement perpendiculaires à la surface principale, l'élément plat étant notamment une plaque (20.1) .

4. Dispositif (1) selon la revendication 3, l'élément (20.1) étant agencé sur la structure hélicoïdale (19.1) et/ou sur la tige (8.1).

5. Dispositif (1) selon au moins l'une quelconque des revendications précédentes, au moins un pas d'hélice présentant des ailettes continues et/ou au moins un pas d'hélice présentant des ailettes interrompues et/ou courbées (230.1, 334.1).

6. Dispositif (1) selon la revendication 5, le moyen d'entraînement comprenant une saillie (335.1) sur l'arbre d'acheminement (4.1), qui est formée par un bord d'ailette (231a.1) d'une ailette interrompue (230.1) et/ou par une section d'ailette courbée (335.1) de l'ailette courbée.

7. Dispositif (1) selon au moins l'une quelconque des revendications précédentes, une surface d'enveloppe intérieure (22) de la chambre allongée (3) comprenant un segment (41.1) qui est essentiellement concentrique à l'un des deux arbres d'acheminement (4.1), et un deuxième segment (41.2) qui est essentiellement concentrique à l'autre des deux arbres d'acheminement (4.2), et la distance radiale de la section de tige cylindrique circulaire de l'arbre d'acheminement correspondant (4.1, 4.2) au segment respectif (41.1, 41.2) de la surface d'enveloppe intérieure (22) de la chambre (3) étant <= 70 mm, de préférence ≤ 60 mm, notamment ≤ 50 mm, de manière particulièrement préférée ≤ 40 mm ou < 30 mm.

8. Dispositif (901) selon la revendication 7, le boîtier (902) comprenant un couvercle qui ferme la chambre et forme une partie de la surface d'enveloppe intérieure (922), le couvercle (902) formant de préférence des sections des segments concentriques (943.1, 943.2) de la surface d'enveloppe intérieure (922) et ces sections formées par le couvercle des segments (943.1, 943.2) de la surface d'enveloppe intérieure (922) concentriques aux deux arbres d'acheminement se touchant.

9. Dispositif (901) selon au moins l'une quelconque des revendications 7 et 8, les segments (943.1, 943.2) de la surface d'enveloppe intérieure (922) concentriques aux arbres d'acheminement respectifs étant reliés entre eux de telle sorte qu'ils entourent complètement les arbres d'acheminement (904.1, 904.2).

10. Dispositif (1) selon au moins l'une quelconque des revendications précédentes, la chambre allongée (3) étant dirigée essentiellement horizontalement.

**11.** Dispositif (1) selon au moins l'une quelconque des revendications précédentes, les structures hélicoïdales (19.1, 19.2) des deux arbres d'acheminement (4.1, 4.2) étant configurées de telle sorte qu'en cas de direction de rotation en sens inverse des arbres d'acheminement (4.1, 4.2) dans laquelle les composantes verticales de la vitesse tangentielle des arbres d'acheminement (4.1, 4.2) sont dirigées vers le haut entre les axes de rotation, un acheminement axial du lait caillé de l'ouverture d'entrée (5) à l'ouverture de sortie (6) est effectué.

**12.** Dispositif (601) selon au moins l'une quelconque des revendications précédentes, la tige comprenant une section (631.1) se rétrécissant dirigée vers l'ouverture d'entrée (605), qui est de préférence d'au maximum 1/3 de la longueur L d'un trajet d'acheminement axial, de manière particulièrement préférée d'au maximum 1/4 de la longueur L du trajet d'acheminement axial (633), et/ou le rapport L/D entre la longueur L du trajet d'acheminement axial et un diamètre extérieur D des arbres d'acheminement étant d'environ 1 à 20, de préférence 2 à 15, notamment 4 à 12 ou 4 à 8.

**13.** Dispositif (601) selon l'une quelconque des revendications précédentes, les pas d'hélice présentant des sections de pente différente.

**14.** Dispositif (1) selon au moins l'une quelconque des revendications précédentes, les arbres d'acheminement (4.1, 4.2), notamment les tiges (8.1, 8.2) des arbres d'acheminement (4.1, 4.2), et le boîtier (2) comprenant respectivement des canaux de fluide (9.1, 10, 17) pour le chauffage de la chambre (3), les canaux de fluide (9.1, 10, 17) faisant partie intégrante du dispositif de chauffage et s'étendant essentiellement le long de la totalité du trajet d'acheminement axial (33) et/ou le dispositif de chauffage étant configuré de telle sorte que la différence de température entre le fluide fourni et le fluide évacué diffère de moins de 10 °C, de préférence de moins de 5 °C ou de moins de 2 °C et/ou que la température du fluide dans l'amont soit inférieure à 90 °C, de manière particulièrement préférée entre 75 et 85 °C.

**15.** Procédé d'acheminement et de plastification en continu de lait caillé, notamment pour le fromage à pâte filée,

a) le chargement du dispositif (1) selon l'une quelconque des revendications 1 à 14 précédentes avec du lait caillé en tant que matière première par l'ouverture d'entrée (5),

b) l'acheminement du lait caillé à plastifier le long d'un trajet d'acheminement (33) entre l'ouverture d'entrée (5) et une ouverture de sortie (6) du dispositif (1) par actionnement des arbres d'acheminement (4.1, 4.2) en sens inverse, de préférence à une vitesse de rotation entre 0,5 et 25 tr/min, de manière particulièrement préférée entre 1 et 10 tr/min, et

c) le chauffage de la surface d'enveloppe intérieure (22) de la chambre (3) et des arbres d'acheminement (4.1, 4.2) avec le dispositif de chauffage de telle sorte que le lait caillé atteigne à l'ouverture de sortie (6) une température de 50 °C à 70 °C, de préférence de 55 °C à 65 °C, le lait caillé étant plastifié en continu, **caractérisé en ce que**

d) le lait caillé à acheminer en continu est transporté non seulement axialement dans la direction d'acheminement (21), mais également autour des arbres d'acheminement (4.1, 4.2).

**16.** Procédé selon la revendication 15, le rapport entre les surfaces chauffées des tiges (8.1, 8.2) des arbres d'acheminement (4.1, 4.2) et la surface de l'enveloppe intérieure (22) au volume du lait caillé à acheminer se trouvant dans la chambre (3) étant ≥ 33 m$^{-1}$, de manière particulièrement préférée ≥ 40 m$^{-1}$, notamment ≥ 50 ou 60 m$^{-1}$.

**Fig. 1**

21

EP 3 855 900 B1

Fig. 2b

Fig. 2a

Fig. 2c

Fig. 2d

22

**Fig. 2e**

**Fig. 3**

VI◄┤  VIII◄┤        X◄┤

V→┤    │VII◄┤   IX◄┤

204.2                                              219.2

204.1

V→┤    VII◄┤   IX◄┤

VI◄┤   VIII◄┤   X◄┤                    221

219.1

## Fig. 4

204.2     229.2    231a.2   232.2
                            231b.2

230.2

204.1

230.1   229.1  231a.1  232.1     231b.1

**Fig. 5**  **Fig. 6**  **Fig. 7**  **Fig. 8**  **Fig. 9**  **Fig. 10**

Fig. 11

Fig. 12

**Fig. 13**

**Fig. 14**

**Fig. 15**

**Fig. 16**

**Fig. 17**

1001

1005

1039

1002

1051 1050 1052 1053

**Fig. 18a**

1001

1005

1039

1051 1050 1052 1053

**Fig. 18b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2473028 B1
- EP 2168429 A1, Bühler
- US 8221816 B1, Leffelman Ricky
- WO 2015164391 A1